Europäisches Patentamt

European Patent Office

Office européen des brevets

(19)

(11) EP 0 819 590 A2

(12) EUROPEAN PATENT APPLICATION

(43) Date of publication:
21.01.1998 Bulletin 1998/04

(51) Int. Cl.$^6$: B60T 8/42

(21) Application number: 97112050.6

(22) Date of filing: 15.07.1997

(84) Designated Contracting States:
AT BE CH DE DK ES FI FR GB GR IE IT LI LU MC
NL PT SE

(30) Priority: 15.07.1996 JP 185093/96
15.07.1996 JP 185094/96
15.07.1996 JP 185095/96
13.03.1997 JP 59610/97

(71) Applicant: DENSO CORPORATION
Kariya-City Aichi-Pref. 448 (JP)

(72) Inventors:
• Terao, Hidenori
Kariya-city, Aichi pref. 448 (JP)
• Sawada, Mamoru
Kariya-city, Aichi pref. 448 (JP)

(74) Representative:
KUHNEN, WACKER & PARTNER
Alois-Steinecker-Strasse 22
85354 Freising (DE)

(54) Brake apparatus for a vehicle

(57) Wheel-slippage quantity Xs is calculated on a basis of estimated body speed Vs and several wheel speeds Vw. It is determined whether braking force of a wheel is a predetermined value or more by determining whether wheel-slippage quantity Xs is a reference value KXs or more. When braking force of the wheel is determined to be large, a regulating valve (13) is driven and pumping control is started. In pumping control, the regulating valve (13) is repeatedly actuated to a communicated state and to an interrupted state.

FIG.1

EP 0 819 590 A2

Printed by Xerox (UK) Business Services
2.15.8/3.4

## Description

CROSS REFERENCE TO RELATED APPLICATION

This application is based upon and claims the benefit of priority of the prior Japanese Applications No. 8-185093 filed on July 15, 1996, No. 8-185094 filed on July 15, 1996, No. 8-185095 filed on July 15, 1996, and No. 9-59610 filed on March 13, 1997, the contents of which are incorporated herein by reference.

BACKGROUND OF THE INVENTION

1. Field of the Invention:

The present invention relates to a brake apparatus for a vehicle, and more particularly, to a brake apparatus for a vehicle wherein braking force is regulated according to brake-pedal operation by a driver or an automatic brake.

2. Related Arts:

Conventionally, so-termed antiskid control to reduce wheel-cylinder pressure and adjust braking torque of a wheel in a case where a slippage state of the wheel has become a predetermined value or more (that is, a case where a slip ratio has become a reference value or more) in order to control this slippage state at an optimal state has been known.

In the above-described antiskid control, in a case where a slip ratio has become a reference value or more, an open or closed state of a pressure-increasing control valve and a pressure-reducing control valve is automatically controlled by a controlling device and wheel-cylinder pressure is adjusted. As a result, braking operation by a driver has absolutely no effect.

However, in a case of a special road-surface state, such as a non-paved road, a phenomenon exists wherein stopping is accomplished more rapidly when the wheels are actively locked, and so not entering antiskid control unless fixed conditions have been fulfilled, as in the foregoing, is not necessarily desirable.

Additionally, separately from this, there exists a natural requirement wherein, from the standpoint of driver psychology, the driver prefers having vehicle behavior placed under his or her own control to the greatest extent possible rather than a state wherein brake operation by the driver has absolutely no effect.

In this regard, it is a first object of the present invention to provide a brake apparatus for a vehicle which can ensure required braking force during vehicle braking while placing vehicle behavior under its own control to the greatest extent possible.

Further, in a conventional brake apparatus, piping to supply brake fluid to wheel cylinders of four wheels is disposed to perform antiskid control and the like. From the standpoint of safety, two systems of piping extending from a master cylinder, such as diagonal piping, longitudinal piping, or the like, are employed. That is to say, wheel cylinders of two wheels are respectively connected to each piping system.

However, in a brake apparatus performing antiskid control with a structure having the above-described piping, in a case where, for example, an inner-side wheel within one piping system has approached a slip occurring limit (referred to as "a road-surface limit") during turning, control simply to reduce the wheel-cylinder pressure of the inner-side wheel is only performed, and so it may be possible to prevent locking of the inner-side wheel. However, because wheel-cylinder pressure of the inner-side wheel is reduced, there exists a problem in that total braking force declines.

In this regard, it is a second object of the present invention to provide a brake apparatus for a vehicle which can improve braking performance by regulating brake-fluid pressure of first and second wheels within a single piping system during vehicle braking.

Additionally, an antiskid control apparatus disclosed in Japanese Patent Application Laid-open No. 61-202965 also is known.

This antiskid control apparatus connects a discharge side of a pump to a wheel cylinder and realizes pressure increase in wheel-cylinder pressure by the pump during antiskid control. Thus, pedal feeling during antiskid control is improved without brake fluid flowing to the master-cylinder side as long as wheel-cylinder pressure does not become higher than master-cylinder pressure.

According to the antiskid control apparatus, however, a because check valves are disposed in conduits thereof, it is impossible for brake-fluid pressure higher than master-cylinder pressure to be applied to the wheel cylinder.

Thus, in a case where, for example, antiskid control is initiated at one wheel and wheel-cylinder pressure is reduced, a pump merely takes out brake fluid flowing into a reservoir to enable further pressure reduction. In other words, brake fluid flowing into the reservoir is not effectively utilized to enhance the braking force of the vehicle.

In light of such a point, it is a third object of the present invention to provide a brake apparatus for a vehicle to effectively utilize brake fluid reduced at one wheel to increase wheel-cylinder pressure of another wheel to higher than, for example, master-cylinder pressure, enhancing stability of vehicle-body behavior or reducing a braking distance.

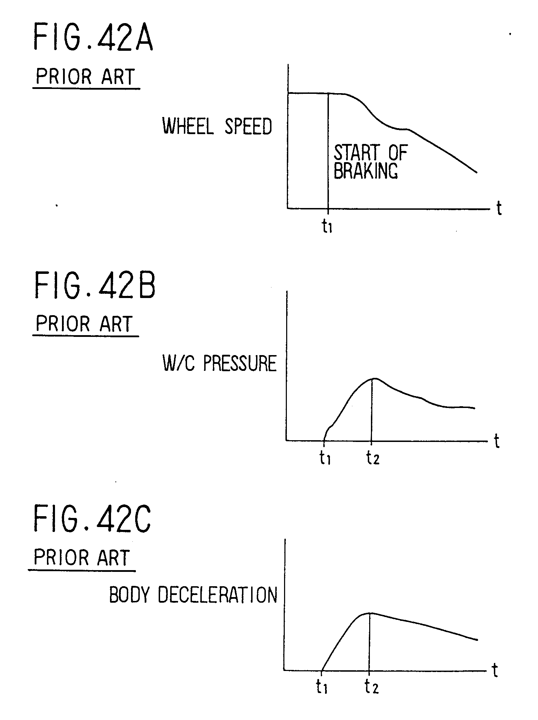

Furthermore, as shown in FIG. 42A, in a case where rotating speed of a wheel is reduced and braking of a vehicle is performed in response to depression of a brake pedal by a driver at time t1, an affect of pedal reaction force generated by the depression operation of the brake pedal may be imparted. That is to say, when a state wherein pedal reaction force has to a certain extent been large continues, subsequently to depres

sion of the brake pedal having been performed with a large depression force of a predetermined value or more, the brake pedal may, outside the realm of conscious awareness, be pressed back.

Consequently, when the brake pedal is pressed back by this reaction force, as shown in FIG. 42B, the master-cylinder pressure and in turn the wheel-cylinder pressure decline (time t2), and so force to suppress rotating torque of the wheel declines. As a result, as shown in FIG. 42C, vehicle-body deceleration (vehicle-body deceleration G) is made small.

Consequently, vehicle braking with maximum vehicle-body deceleration G cannot be performed, and so desired braking performance may not be obtained.

In this regard, it is a fourth object of the present invention to provide a brake apparatus for a vehicle which realizes large vehicle-body deceleration and can enhance braking performance even in a case where, for example, pedal reaction force during vehicle braking has become large.

SUMMARY OF THE INVENTION

In the present invention to achieve the above-described first object, brake-fluid pressure generated by a brake-fluid pressure-generating device (for example, a master cylinder) is applied via a first conduit to a wheel braking-force generating device (for example, a wheel cylinder) due to depression force by a driver or operation of automatic braking, and wheel braking force is generated.

Accordingly, in a case where wheel braking force has been determined by a determining device to be a predetermined value or more, a regulating valve provided in a second conduit is switched from an interrupted state to a communicated state by a controlling device. Sequentially, the interrupted state and communicated state thereof are repeated at a predetermined interval. Because the second conduit connects one end of the first conduit to a brake-fluid containing device, brake fluid within the first conduit is discharged into the brake-fluid containing device (for example, a reservoir).

That is to say, with this invention, in a case where wheel braking force has become as large as a predetermined value or more, such as when, for example, a brake pedal has been depressed and a slippage state of a wheel has become considerably large so as to approach a road-surface limit, actuation to switch the regulating valve from an interrupted state to a communicated state is periodically repeated, brake fluid is allowed to escape from the first conduit to the reservoir, and wheel-cylinder pressure is reduced. As a result, wheel braking force declines, and a so-termed pumping brake (hereinafter termed "pumping control") can be realized with a simple structure. Therefore, deterioration of the wheel to a locking tendency can be delayed.

Additionally, because the master cylinder and the wheel cylinder are communicated by the first conduit, master-cylinder pressure is reduced when brake fluid is allowed to escape to the reservoir. Accordingly, the driver can be informed by this change in brake-fluid pressure during initiation and execution of pumping control. In addition, pedal reaction force can be reduced, and so decline in braking force due to return of the brake pedal can be prevented.

Furthermore, with conventional antiskid control, the conduit reaching from the master cylinder to the wheel cylinder is interrupted during execution of antiskid control. Therefore, behavior of the wheel (and in turn the vehicle body) does not change at all irrespective of how much the brake pedal is depressed. However, according to the present invention, the master cylinder and the wheel cylinder are communicated during pumping control. Action of the brake pedal can be reflected to a certain extent in pumping control. Consequently, because the intent of the driver can be reflected in vehicle-body behavior, there exists an effect wherein a sense of reassurance with respect to brake operation and driving feeling are enhanced.

Moreover, with conventional antiskid control the wheel cannot be caused to lock, but in the present invention, it is possible also to cause wheel to actively lock in a case where the brake pedal has forcefully been depressed by a certain amount or more by priorly regulating an amount of brake fluid allowed to escape from the regulating valve to the reservoir.

A discharge device (for example, a pump) to take out brake fluid from the containing device and discharge into the first conduit may be provided.

In this case, brake fluid accumulated in the reservoir can be returned to the first conduit by driving the pump. Therefore, it can be prevented for the reservoir to be filled with brake fluid (reservoir bottoming). As a result, pumping control can be performed for a prolonged period.

Operation by the discharge device is preferably executed substantially concurrently with initiation of actuation of the regulating valve by the controlling device. Due to this, the reservoir bottoming can be reliably prevented.

The determining device can determine based on a wheel slippage quantity whether wheel braking force is equal to or more than the predetermined value. Consequently, in a case where wheel slippage quantity is a predetermined value or more, wheel braking force can be determined to have become a predetermined value or more.

Also, the determining device can determine based on a wheel-slippage integrated value whether wheel braking force is equal to or more than the predetermined value. Consequently, in a case where a wheel-slippage integrated value is a predetermined value or more, wheel braking force can be determined to have become a predetermined value or more.

Further, the determining device can determine based on a wheel slip ratio whether wheel braking force is equal to or more than the predetermined value. Consequently, in a case where wheel slip ratio is a predetermined value or more, wheel braking force can be determined to have become a predetermined value or more.

The determining device can determine magnitude of wheel braking force based on vehicle-body deceleration. Consequently, in a case where vehicle-body deceleration is a predetermined value or more, wheel braking force can be determined to have become a predetermined value or more.

The determining device can determine magnitude of wheel braking force based on master-cylinder pressure. Consequently, in a case where master-cylinder pressure is a predetermined value or more, wheel braking force can be determined to have become a predetermined value or more.

The determining device can determine magnitude of wheel braking force based on wheel-cylinder pressure. That is to say, in a case where wheel-cylinder pressure is a predetermined value or more, wheel braking force can be determined to have become a predetermined value or more.

Actuation of the regulating valve by the controlling device is preferably executed at each of several wheels. In this case, pumping control is performed at each of the several wheels. Further, because fluctuation in brake-fluid pressure increases the more there is increase in a number of a pumping-controlled wheel, the driver can know the present extent of pumping control by sensing this fluctuation in brake-fluid pressure from action of the brake pedal.

Actuation of the regulating valve by the controlling device may be executed at each of several piping systems. In this case, pumping control is performed at each of the respective piping systems (consequently, two wheels each). In this case, there exists an advantage in that it is easier for the driver to know the extent of pumping control than in a case wherein pumping control is performed at each of the several wheels. Further, it is also acceptable for one system to perform pumping control and for the other system to perform antiskid control.

Actuation of the regulating valve by the controlling device may be executed en bloc for all wheels. In this case, there exists an advantage in that it is easier for the driver to know the extent of pumping control than in a case wherein pumping control is performed at each of the respective piping systems.

A proportioning control valve may be disposed in the first conduit, and a discharge destination of the discharging device may be connected between the proportioning control valve and the wheel braking-force controlling device.

Consequently, a wheel-cylinder side can be made higher in pressure than a master-cylinder side due to action of the proportioning control valve as the result that a proportioning control valve has been connected so that a wheel-cylinder side becomes high in pressure. Therefore, wheel-cylinder pressure which is large in comparison with depression force given to the brake pedal is can be generated, and so braking force can be heightened.

An antiskid control device to regulate brake-fluid pressure at the wheel braking-force generating device and optimally maintain a braking state of a wheel may be provided.

In this case, because antiskid control can be performed for a wheel which has reached a road-surface limit, there exists an advantage in that braking force of the wheel is enhanced. In particular, when the timing with which the above-described pumping control is started is established so as to be earlier than the start of antiskid control, there exists an advantage in that braking can be performed under a certain extend of control residing with the driver due to pumping control, and then, antiskid control can be performed when the wheel has reached the road-surface limit.

Further, it is also acceptable to allow the driver to select whether pumping control is performed or antiskid control is performed.

In the present invention to achieve the above-described second object, depression force given by a driver is conveyed from a brake pedal to a brake-fluid pressure-generating device (for example, a master cylinder), and brake-fluid pressure is generated at the master cylinder. This brake-fluid pressure is applied via a first conduit to first and second wheel braking-force generating devices (for example wheel cylinders), and wheel braking force is generated at first and second wheels.

Accordingly, in a case where it has been determined by a determining device that the first wheel has approached a road-surface limit, brake fluid within the brake-fluid pressure-generating device and the first wheel braking-force generating device is simultaneously discharged via the first conduit in a containing device (for example, a reservoir) by a first controlling device. Additionally, when the first controlling device has been executed, brake fluid accumulated in the containing device is substantially simultaneously taken out and discharged into the first conduit by a discharging device (for example a pump).

That is to say, with the above-described structure, in a case where one wheel (the first wheel) among two wheels in a single piping system has approached a road-surface limit, brake fluid is allowed to escape from the first conduit communicated with the wheel cylinder of the first wheel to the reservoir, so that the first wheel is prevented from reaching the road-surface limit. Concurrently therewith, brake fluid is taken out from the reservoir and supplied to the first conduit by the pump. As a result, wheel-cylinder pressure of the other wheel (the second wheel) can be increased. Therefore, braking force of the second wheel is increased, and so total braking force of the wheels connected to the single piping system, and in turn braking force of the entire vehicle, comes to be increased.

That is to say, brake fluid of the wheel cylinder of the first wheel which has approached a road-surface limit can easily be caused to move to the wheel cylinder of the other, second wheel (distant from the road-surface limit), and so overall braking force can be heightened.

Additionally, because master-cylinder pressure as well is temporarily reduced when brake fluid is discharged in the reservoir, pedal reaction force is alleviated. Thus, the brake pedal moves in the direction of depression and uptake by the pump is performed simultaneously therewith. As a result, the wheel-cylinder pressure of the second wheel is further increased by an amount corresponding to this depression amount of the brake pedal. Consequently, braking force is increased even when the state of brake-pedal depression by the driver is constant.

Furthermore, because almost no pedal reaction force (a rigid brake pedal feeling) is conveyed to the driver with pump discharge during a state wherein the brake pedal is depressed, no effect (for example, a feeling of press-back of the brake pedal) due to pedal reaction force is received.

If the determine device has determined that the first wheel has approached a road-surface limit, it is preferable that brake fluid in the brake-fluid pressure-generating device and in the first wheel braking-force generating device is simultaneously discharged via the first conduit in the containing device by the first controlling device. Similarly, if the determining device has determined that the second wheel has approached a road-surface limit, it is preferable that brake fluid in the brake-fluid pressure-generating device and in the second wheel braking-force generating device is simultaneously discharged via the first conduit in the containing device by a second controlling device.

Accordingly, when the first controlling device or the second controlling device has been executed, brake fluid accumulating in the containing device is substantially simultaneously taken out and supplied into the first conduit by the discharging device.

That is to say, in a case where each of the several wheels has approached a road-surface limit, brake fluid from the wheel cylinder of each of the several wheels is allowed to escape to the reservoir and wheel-cylinder pressure thereof is reduced. As a result, each of the several wheels can be prevented from reaching wheel locking. Along with this, brake fluid is supplied to the first conduit by the pump, and so wheel-cylinder pressure of the wheels on the side whereat the first controlling device or the second control device has not been executed can be increased. Thus, braking force of the wheel thereof can be heightened, and so total vehicle braking force can be improved.

If the determining device has determined that the first wheel has approached a road-surface limit, it is preferable that a first regulating valve is controlled from an interrupted state to a communicated state by a first controlling device to open a first reflux conduit, and brake fluid in the brake-fluid pressure-generating device and in the first wheel braking-force generating device is simultaneously discharged via the first reflux conduit in the containing device by a first controlling device. Similarly, if the determining device has determined that the second wheel has approached a road-surface limit, it is preferable that a second regulating valve is controlled from an interrupted state to a communicated state by a second controlling device to open a second reflux conduit, and brake fluid in the brake-fluid pressure-generating device and the second wheel braking-force generating device is simultaneously discharged in the containing device by a second controlling device.

Accordingly, when the first controlling device or the second controlling device has been executed, brake fluid accumulated in the containing device is substantially simultaneously taken out and discharged into the first conduit by the discharging device.

That is to say, in a case where each of the several wheels have approached a road-surface limit, the first regulating valve or the second regulating valve is driven so that brake fluid from the wheel cylinder of each of the several wheels is allowed to escape to the reservoir and wheel-cylinder pressure thereof is reduced. As a result, each of the several wheels can be prevented from reaching wheel locking. Along with this, brake fluid is supplied to the first conduit by the pump, and so wheel-cylinder pressure of the wheel on the side whereat the first controlling device or the second control device has not been executed can be increased. Thus, braking force of the wheel thereof can be heightened, and so total vehicle braking force can be improved.

An antiskid control device may provided to regulate brake-fluid pressure at the wheel braking-force generating devices and optimally maintain braking state of the wheels.

In this case, because antiskid control can be performed for a wheel which has reached a road-surface limit, there exists an advantage that braking force is improved. In particular, as was described above, there is effectiveness in a case where wheel locking of one wheel cannot be prevented simply by moving brake fluid from the wheel cylinder of the one wheel to the wheel cylinder of the other wheel.

Additionally, in the present invention to achieve the above-described third object, during vehicle braking, the first wheel braking-force generating device receives first brake-fluid pressure from the brake-fluid pressure-generating device via a conduit and generates wheel braking force at the first wheel, and the second wheel braking-force generating device receives the first brake-fluid pressure from the brake-fluid pressure-generating device via the conduit and generates wheel braking force at the second wheel. Further, a first pressure-reducing device reduces brake-fluid pressure applied to the first wheel braking-force generating device while interrupting the flow of brake fluid between the first wheel braking-force generating device and the second wheel braking-force generating device, and the discharging device takes in a portion of brake fluid pressure-reduced by the first pressure-reducing device and discharges same toward the second wheel braking-force generating device.

Accordingly, when brake-fluid pressure at the second wheel braking-force generating device has become a second brake-fluid pressure which is higher than the first brake-fluid pressure generated by the brake-fluid pressure-generating device in accompaniment to actuation of the discharging device, a maintaining device provided for the first and second wheel braking-force generating devices maintains this second brake-fluid pressure.

That is to say, brake fluid pressure-reduced from a wheel cylinder on one wheel side is supplied to a wheel cylinder on the other wheel side. As a result, brake fluid pressure-reduced from one wheel is utilized effectively to increase the brake-fluid pressure on the other wheel side higher than for example master-cylinder pressure, whereby stability of vehicle-body behavior is improved, and braking distance can be reduced, even when there is no further depression of the brake pedal by the driver.

The above-described structure can be modified as follows: During vehicle braking, the first wheel braking-force generating device receives first brake-fluid pressure from the brake-fluid pressure-generating device via the conduit and generates wheel braking force at the first wheel, and the second wheel braking-force generating device receives first brake-fluid pressure from the brake-fluid pressure-generating device via the conduit and generates wheel braking force at a second wheel; A first pressure-reducing device reduces brake-fluid pressure applied to the first wheel braking-force generating device while interrupting the flow of brake fluid between the first wheel braking-force generating device and the second wheel braking-force generating device, a second pressure-reducing device reduces brake-fluid pressure applied to the second wheel braking-force generating device while interrupting the flow of brake fluid between the first wheel braking-force generating device and the second wheel braking-force generating device, and a controlling device drives one or the other of the first or second pressure-reducing devices according to vehicle-body behavior.

During execution of the controlling device, the discharging device takes, in pressure-reduced brake fluid pressure-reduced from the one wheel braking-force generating device corresponding to the first or second pressure-reducing device driven by the controlling device and discharge same toward the other wheel braking-force generating device. When brake-fluid pressure at the other wheel braking-force generating device has become a second brake-fluid pressure which is higher than the first brake-fluid pressure of the brake-fluid pressure-generating device in accompaniment to execution of the discharging device. A maintaining device maintains this second brake-fluid pressure.

That is to say, actuation of the first and second pressure-reducing devices is controlled by the controlling device according to vehicle-body behavior such as a state of speed reduction, a state of turning, or the like.

Because of this, suitable braking-force distribution can be performed according to the vehicle-body behavior such as a state of speed reduction, a state of turning, or the like, thus high braking force can be realized at the several wheels, and so braking distance can be effectively shortened in various driving states.

The controlling device may include a load movement detecting device to detect load movement during vehicle braking as the vehicle-body behavior.

That is to say, because vehicle-body behavior can accurately be determined based on the detected load movement, more precise control can be performed.

The controlling device may reduce, on a basis of detected results of the load-movement detecting device, brake-fluid pressure applied to the wheel braking-force generating device of a wheel wherefrom ground-contacting load is reduced, and the maintaining device maintains brake-fluid pressure applied to the wheel braking-force generating device of a wheel whereto the ground-contacting load is increased to the second brake-fluid pressure with the pressure-reduced brake fluid.

With this structure, brake-fluid pressure is reduced on the one wheel side whereat ground-contacting load becomes smaller, and brake-fluid pressure is increased and sustained on the other wheel side whereat ground-contacting load is increased. As a result, preferred braking-force distribution can be performed.

A detecting device to detect vehicle-body deceleration, for example a longitudinal G sensor or the like, can be employed as the load-movement detecting device during vehicle braking. When these sensors are utilized, load movement can be detected easily and accurately.

A detecting device to detect a turning state, for example a steering sensor to detect steering angle, a lateral G sensor, or the like, can be employed as the load-movement detecting device during vehicle braking. When these sensors are utilized, load movement can be detected easily and accurately.

A detecting device to detect a slippage state of each of the first and second wheels and an antiskid control device to control increasing and decreasing of brake-fluid pressure applied to the first and second wheel braking-force generating devices according to the slippage state thereof may be further provided to the above-described brake apparatus.

In this case, during execution of pressure reduction of brake-fluid pressure applied to the first or second wheel braking-force generating device by the antiskid control device, the discharging device takes in the pressure-reduced brake fluid and discharges same within the conduit, and the maintaining device maintains the second brake-fluid pressure which is higher than the first brake-fluid pressure generated by the brake-fluid pressure-generating device in accompaniment to actuation of the discharging device.

That is to say, in a case where antiskid control is not performed for one wheel which is within the same piping system, ample margin exists in the braking force which the one wheel can demonstrate. Therefore, brake fluid pressure-reduced by antiskid control is employed to intensify the braking force of the one wheel where antiskid control is not performed. Because the braking force of the entire vehicle can be enhanced due to intension of the braking force, there exists an effect in that braking distance is shortened.

A proportioning control valve can be employed as the maintaining device. When first brake-fluid pressure at the brake-fluid pressure-generating device is a pressure higher than a predetermined split-point pressure, the proportioning control valve maintains brake-fluid pressure of the wheel braking-force generating device at the second brake-fluid pressure by attenuating pressure at a predetermined attenuating rate during flow of brake fluid to the brake-fluid pressure-generating device from a side of at least one of the wheel braking-force generating devices. Moreover, the proportioning control valve allows brake fluid to flow with substantially no pressure attenuation during flow of brake fluid from a side of the brake-fluid pressure-generating device to a side of at least one of the wheel braking-force generating devices and during flow of brake fluid from a side of the wheel braking-force generating device to a side of the brake-fluid pressure-generating device when brake-fluid pressure at the brake-fluid pressure-generating device is a predetermined split-point pressure or less.

A two-way valve to communicate and interrupt flow of brake fluid between a side of the brake-fluid pressure-generating device and a side of at least one of the wheel braking-force generating device can be employed as the maintaining device.

In this case, a function similar to that of the proportioning control valve can be realized even by a two-way control valve.

When the two-way valve is employed as the maintaining device, it is preferable that the two-way valve is controlled to assume an interrupted state to interrupt flow of brake fluid between a side of the brake-fluid pressure-generating device and a side of the wheel braking-force generating device when control for increasing or decreasing pressure is being executed for wheel braking-force generating device of a first wheel or a second wheel by the antiskid-control device, and conversely, is controlled to assume a communicated state to permit flow of brake fluid between a side of the brake-fluid pressure-generating device and a side of the wheel braking-force generating device when control for increasing or decreasing pressure is being executed for wheel braking-force generating devices of the first wheel and the second wheel, or when antiskid control is not being executed.

Because this two-way valve is controlled to assume an interrupted state in a case where pressure-increasing or -reducing control is performed by antiskid control for either one of the wheel braking-force generating devices of the first and second wheels, it is possible to sustain wheel-cylinder pressure at the wheel subjected to pressure-increasing or -reducing control. Additionally, a communicated state of the two-way valve is caused to be assumed in a case where pressure-increasing or -reducing control is performed for both wheels, and so antiskid-control performance can be improved on a low-µ road such as an iced road or the like. Further, a communicated state of the two-way valve is caused to be assumed in a case where antiskid control is not performed, and so ordinary brake operation is possible.

By controlling the operation of the two-way valve in this way, required brake-fluid pressure is suitably ensured according to the state of antiskid control, and high braking force can be realized.

In the present invention to achieve the above-described first object, depression force given by a driver is conveyed from a brake pedal to a brake-fluid pressure-generating device (for example, a master cylinder), and brake-fluid pressure is generated at the master cylinder. This brake-fluid pressure is applied to a wheel braking-force generating device (for example a wheel cylinder) provided for a wheel, and wheel braking force is generated.

At this time, brake-fluid pressure at the brake-fluid pressure-generating device is reduced so that pedal reaction force is reduced. As a result, pulling action of the brake pedal occurs. Thus, depression action can further be assisted with respect to pedal operation by the driver. Therefore, the brake pedal being pressed back by pedal reaction force and decline in brake-fluid pressure at the brake-fluid pressure-generating device can largely be suppressed. Additionally, depending on the extent of assistance for pedal depression, it is possible also to create a state wherein brake-fluid pressure due to pedal depression by the driver is gradually heightened.

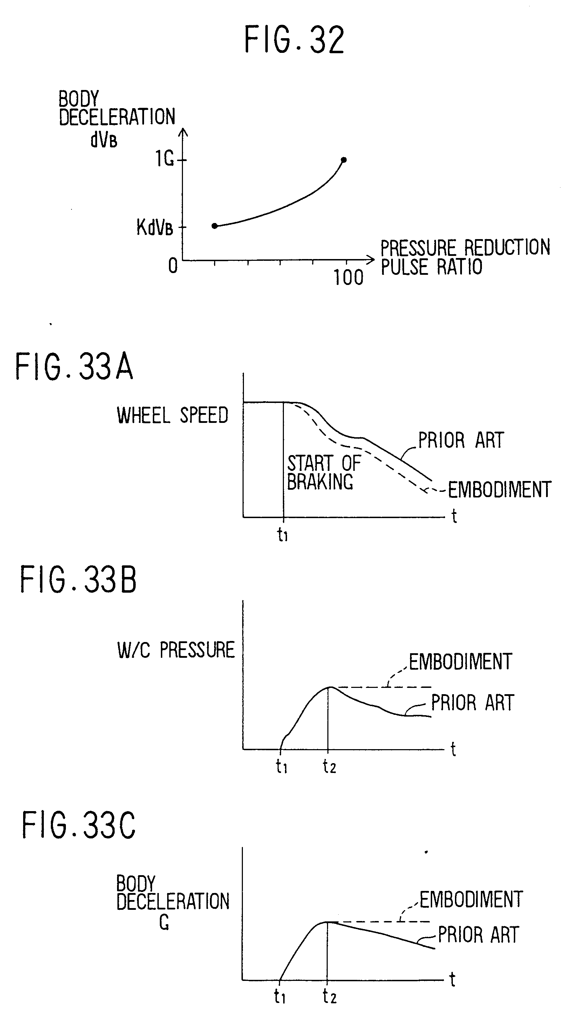

Brake-fluid pressure at the wheel braking-force generating device as well as brake-fluid pressure at the brake-fluid pressure-generating device may be reduced so that pedal reaction force is reduced. As a result, pulling action of the brake pedal can be performed. Thus, it becomes possible for the driver to further depress the brake pedal, and so as a result thereof, as shown in FIG. 33B, wheel-cylinder pressure can be heightened more than in the conventional antiskid system. That is to say, brake-fluid pressure can be sustained at a high value close to a peak according to the conventional antiskid system, and so wheel speed is reduced as shown in FIG. 33A. As a result, as shown in FIG. 33C, high vehicle-body deceleration G can be maintained, and braking performance is improved.

That is to say, the muscles of the human leg has a property such that it can resist larger reaction force from the brake pedal when the leg is in an extended state. Therefore, when the brake pedal is operated so as to be pulled in, a depressed state of the brake pedal can be sustained with larger depressing force. Consequently, because brake-fluid pressure is reduced once, braking torque is slightly reduced first, but large brake-fluid pressure can immediately be recovered. As a result, reduction of vehicle-body deceleration G is prevented and braking can be performed with high vehicle-body deceleration G.

At this time, if brake-fluid pressure at the wheel braking-force generating device also is reduced simultaneously with the reduction of brake-fluid pressure at the brake-fluid pressure-generating device, wheel speed changes as shown in FIG. 33A. That is to say, wheel speed changes as if pumping braking were being performed, and deterioration of the wheel to a locking tendency can be delayed.

A regulating valve can be disposed in a second conduit connecting a containing device (for example a reservoir) and a first conduit which connects the brake-fluid pressure-generating device and the wheel braking-force generating device. When the regulating valve is controlled to assume a communicated state, brake-fluid pressure at the brake-fluid pressure-generating device and the wheel braking-force generating device can be reduced. As a result, pulling action of the brake pedal can occur arid moreover depression action of the brake pedal can be assisted. Therefore, braking force larger than the conventional antiskid system can be realized.

BRIEF DESCRIPTION OF THE DRAWINGS

Other features and advantages of the present invention will be appreciated, as well as methods of operation and the function of the related parts, from a study of the following detailed description, the appended claims, and the drawings, all of which form a part of this application. In the drawings:

FIG. 1 is a model diagram of a brake apparatus of a first embodiment;
FIG. 2 is a block diagram illustrating an electrical structure of the first embodiment;
FIG. 3 is a flowchart illustrating pumping-control processing of the first embodiment;
FIG. 4 is a time chart illustrating operation according to pumping control of the first embodiment;
FIG. 5 is a model diagram illustrating a brake apparatus of a second embodiment;
FIG. 6 is a flowchart illustrating pumping-control processing of the second embodiment;
FIG. 7 is a model diagram illustrating a brake apparatus of a third embodiment;
FIG. 8 is a flowchart illustrating pumping-control processing of the third embodiment;
FIG. 9 is a model diagram of a modified brake apparatus of the third embodiment;
FIG. 10 is a model diagram of a brake apparatus a fourth embodiment;
FIG. 11 is a model diagram of a brake apparatus of a fifth embodiment;
FIG. 12 is a block diagram illustrating an electrical structure of the fifth embodiment;
FIG. 13 is a flowchart illustrating antiskid-control processing of the fifth embodiment;
FIG. 14 is a flowchart illustrating regulating-control processing of the fifth embodiment;
FIG. 15 is a time chart illustrating operation according to regulating control of the fifth embodiment;
FIG. 16 is a model diagram of a brake apparatus of a sixth embodiment;
FIG. 17 is a flowchart illustrating regulating-control processing of the sixth embodiment;
FIG. 18 is a model diagram of a brake apparatus of a seventh embodiment;
FIG. 19 is a graph illustrating a mode of operation of a proportioning control valve of the seventh embodiment;
FIG. 20 is a block diagram indicating an electrical structure of the seventh embodiment;
FIG. 21 is a flowchart illustrating control processing of the seventh embodiment;
FIG. 22 is a time chart illustrating operation due to control of the seventh embodiment;
FIG. 23 is a graph illustrating braking-force distribution for wheels of the seventh embodiment;
FIG. 24 is a model diagram of a brake apparatus of a eighth embodiment;
FIG. 25 is a model diagram of a brake apparatus of a ninth embodiment;
FIG. 26 is a flowchart illustrating control processing of the ninth embodiment;
FIG. 27 is a flowchart illustrating control processing of a tenth embodiment;
FIG. 28 is a graph illustrating a relationship between steering angle and pressure-reduction pulse ratio of the tenth embodiment;
FIG. 29 is an explanatory diagram illustrating "on" and "off" states of a pressure-reducing control valve of the tenth embodiment;
FIG. 30 is a time chart illustrating operation due to control of the tenth embodiment;
FIG. 31 is a flowchart illustrating control processing of a eleventh embodiment;
FIG. 32 is a graph illustrating a relationship between steering angle and pressure-reduction pulse ratio of the eleventh embodiment;
FIGS. 33A to 33C are explanatory diagrams for describing a principle of a twelfth embodiment;
FIG. 34 is a model diagram of a brake apparatus of the twelfth embodiment;
FIG. 35 is a block diagram illustrating an electrical structure of the twelfth embodiment;
FIG. 36 is a flowchart illustrating pumping-control processing of the twelfth embodiment;

FIG. 37 is a time chart illustrating operation according to pumping control of the twelfth embodiment;

FIG. 38 is a model diagram of a brake apparatus of a thirteenth embodiment;

FIG. 39 is a flowchart illustrating pumping-control processing of the thirteenth embodiment;

FIG. 40 is a time chart illustrating operation according to control of the thirteenth embodiment;

FIG. 41 is a time chart illustrating operation in a case where control by a pump is repeated; and

FIGS. 42A to 42C are time charts illustrating operation according to a prior art.

## DETAILED DESCRIPTION OF THE PREFERRED EMBODIMENTS

Preferred embodiments of a brake apparatus for a vehicle according to the present invention will be described in detail hereinafter with reference to the drawings.

(First Embodiment)

The present embodiment is an example wherein a brake apparatus for a vehicle according to the present invention is applied in a vehicle having diagonal brake piping provided with respective piping systems which respectively connect front-right wheel to rear-left wheel and front-left wheel to rear-right wheel in a front-wheel drive, four-wheeled car. Pumping control which will be described later is performed with respect to the several wheels.

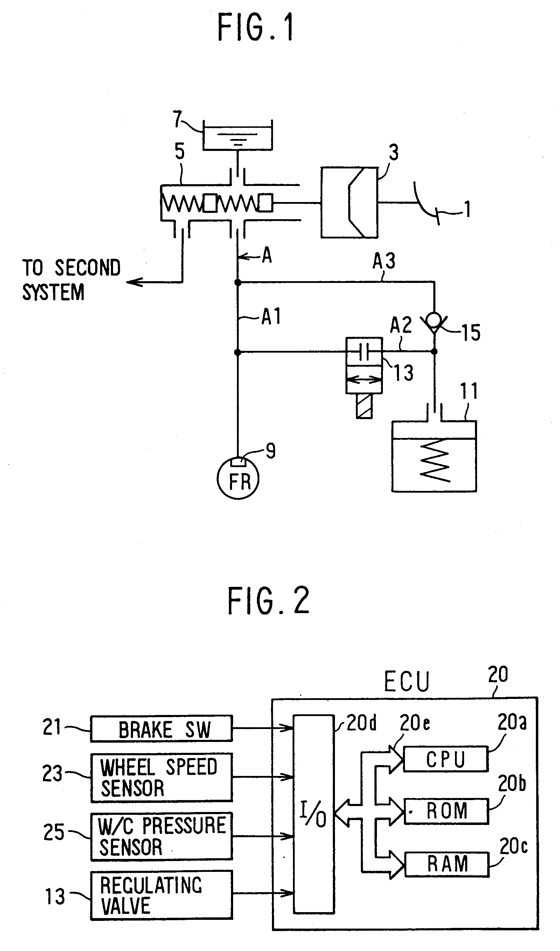

Firstly, basic structure of the brake apparatus will be described with reference to the model diagram shown in FIG. 1. Further, to simplify description, one wheel of a particular piping system (for example the front-right wheel) will be taken as an example and described in description hereinafter.

In FIG. 1, a brake pedal 1 depressed by a driver when applying braking force to the vehicle is connected to a booster 3, and depression force applied to the brake pedal 1 and pedal stroke are conveyed to the booster 3.

A master cylinder (M/C) 5 is a device to apply brake-fluid pressure boosted by the booster 3 to the entirety of the brake piping. A master reservoir 7 to accumulate brake fluid is disposed in the M/C 5.

Master-cylinder pressure (M/C pressure) generated by the foregoing M/C 5 is conveyed to brake fluid within a first piping system A linking the M/C 5, a wheel cylinder (W/C) 9 disposed in the front-right wheel FR to impart braking force to this wheel, and another W/C disposed in the rear-left wheel to impart braking force to this wheel. M/C pressure is similarly conveyed also to a second piping system linking respective W/Cs disposed in the front-left wheel and the rear-right wheel to the M/C 5. But because structure similar to the first piping system A can be employed, detailed description of the second piping system will be omitted.

The above-mentioned first piping system A is composed of a conduit A1 communicating the M/C 5 and the W/C 9, a conduit A2 branching from the conduit A1 and extending to a reservoir 11, in which a solenoid (regulating) valve 13 is disposed to control opening and closing of the conduit A2, and a conduit A3 extending from the reservoir 11 to the conduit A1 and bypassing the regulating valve 13, in which a check valve 15 is disposed.

According to the present embodiment, as will be described later, the regulating valve 13 is actuated to obtain a communicated state, and thereafter deactuated to obtain an interrupted state, that is, pumping control to repeat the communicated and interrupted states at a predetermined interval is performed.

Electrical structure of the present embodiment will be described next.

The above-described pumping control is performed by an electronic control unit (ECU) 20 shown in FIG. 2.

This ECU 20 is structured by a microprocessor provided with a CPU 20a, a ROM 20b, a RAM 20c, an input/output portion 20d, a bus line 20e, and the like of known art.

A brake switch 21 to detect when the brake pedal 1 has been depressed, wheel-speed sensors 23 to detect wheel speed of each of the several wheels, and W/C-pressure sensors 25 to detect W/C pressure of each of the several wheels are connected to the input/output portion 20d. Additionally, the regulating valve 13 is connected to the input/output portion 20d.

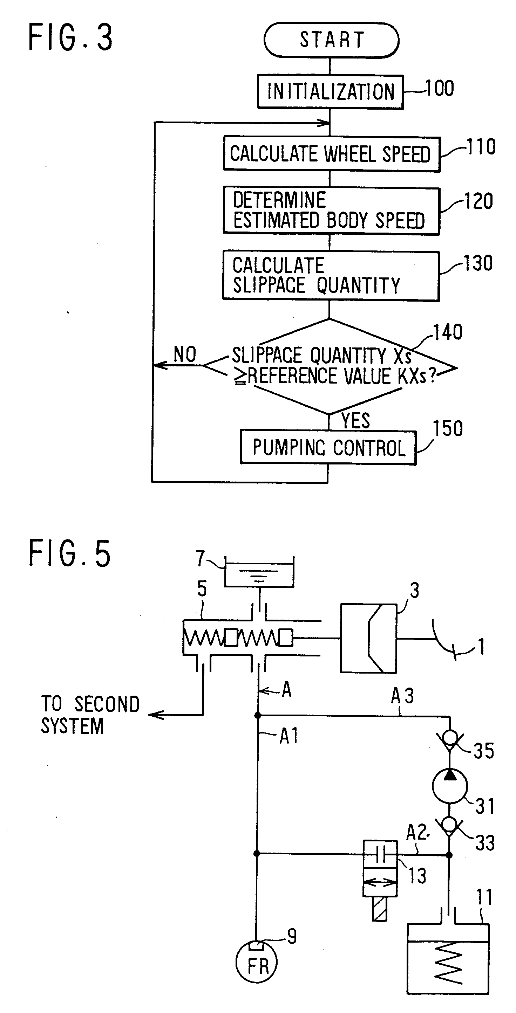

Pumping-control processing performed by the ECU 20 will be described next with reference to FIG. 3. Herein, an example wherein pumping control is performed on a basis of a wheel-slippage quantity Xs will be described.

In step 100 in FIG. 3, processing for initialization setting of known art, such as clearing flags, is performed.

Next, in step 110, wheel speeds Vw of the several wheels are calculated on a basis of signals from the wheel-speed sensors 23 of the respective wheels.

Next, in step 120, estimated body speed Vs is determined on a basis of for example the largest among the several wheel speeds Vw under a condition that the change thereof is limited within a predetermined range.

Next, in step 130, wheel-slippage quantity Xs of each of the several wheels is calculated according to the following equation (1) on a basis of the estimated body speed Vs and the several wheel speeds Vw.

$$Xs = (Vs - Vw) \tag{1}$$

Next, in step 140, it is determined whether braking force of each of the several wheels is a predetermined value or more by determining whether wheel-slippage quantity Xs calculated in the foregoing step 130 is a reference value KXs or more. When determined hereat that braking force is the predetermined value or more, execution advances to step 150; conversely, when determined not to be so, execution returns to the above-described step 110.

Further, the reference value KXs is established at a value such that timing for starting pumping control comes to be earlier than timing for starting ordinary antiskid control, that is to say, at a value such that which the wheel-slippage quantity KXs comes to be earlier to a certain extent than the wheel reaches the road-surface limit.

In step 150, the regulating valve 13 is driven and pumping control is started because it was determined in the foregoing step 140 that the braking force of the wheel in question (described with the front-right wheel FR taken as an example in description hereinafter) is large and considerable slippage is occurring. That is to say, control to repeatedly actuate the regulating valve 13 to a communicated state and to an interrupted state is performed, and then execution returns to the above-described step 110.

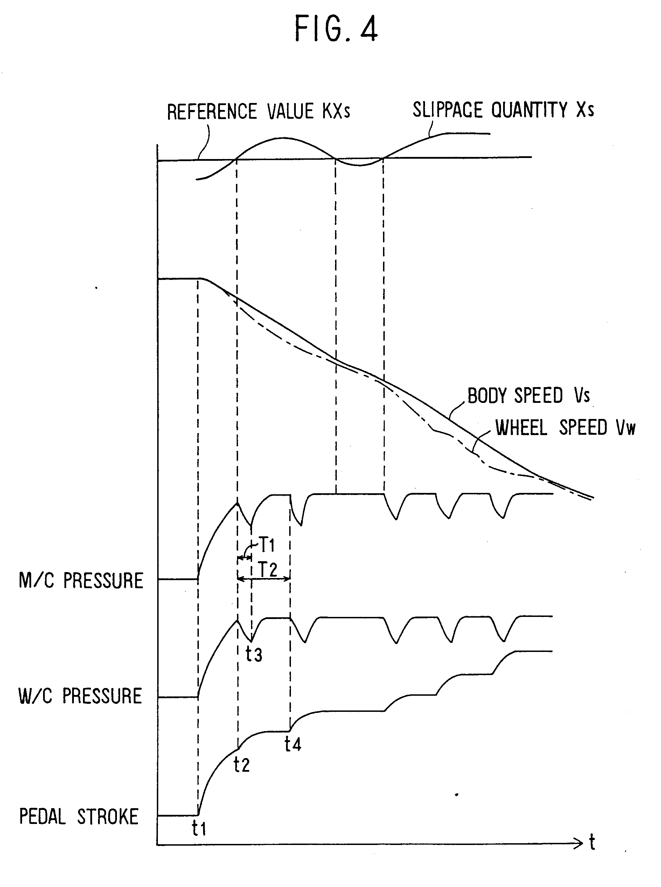

Fluctuation in brake-fluid pressure and the like due to the above-described pumping control will be described next with reference to FIG. 4.

As shown in FIG. 4, when the brake pedal 1 is depressed with a certain timing (time t1), and M/C pressure and W/C pressure gradually rise so that the brake is applied to the wheel. Together with this, the wheel speed Vw declines and the wheel-slippage quantity Xs gradually increases.

Accordingly, when for example at the front-right wheel FR the wheel-slippage quantity Xs surpasses the reference value KXs (time t2), the regulating valve 13 is actuated and assumes a communicated state. As a result, there is escape of brake fluid from the conduit A1 to the reservoir 11, and so M/C pressure and W/C pressure decline. Because braking force is temporarily reduced due to this decline in W/C pressure, the rise of the wheel-slippage quantity Xs also is reduced. At this time, the brake pedal 1 is pulled due to the drop in M/C pressure, and so pedal stroke (depression quantity) is increased.

Thereafter, when a predetermined interval T1 has elapsed from time t2 (time t3), the regulating valve 13 is deactuated and assumes an interrupted state. Because the conduit A2 is interrupted due to this, brake fluid is not allowed to escape from the conduit A1 via the conduit A2 to the reservoir 11, and so the decline in M/C pressure and W/C pressure stops. Thereafter, M/C pressure and W/C pressure recover due to the foregoing depression operation of the brake pedal 1.

Accordingly, when a predetermined interval T2 (T1 < T2) has elapsed from the foregoing time t2 (time t4), the regulating valve 13 is again actuated and assumes a communicated state, and thereafter similar operation is repeated.

Moreover, this pumping control stops in a case wherein the wheel-slippage quantity Xs has declined to less than the reference value KXs.

In this way, according to the present embodiment, the wheel-slippage quantity Xs of each of the several wheels is determined, and in a case where this wheel-slippage quantity Xs has become the reference value KXs or more, it is determined that the wheel braking force of each of the several wheels has become larger (and for example has approached the road-surface limit), the regulating valve 13 is driven to perform pumping control to repeat a communicated state and an interrupted state of the regulating valve 13 at every iteration of a predetermined time interval.

Therefore, W/C pressure of for example the front-right wheel FR comes to repeat a drop and a recovery at every iteration of a predetermined time interval, and braking force gradually declines and gradually becomes remote from the road-surface limit, whereby a deterioration to wheel locking is prevented.

Additionally, conventionally, in a case such as this, antiskid control of the front-right wheel FR is immediately started and braking operation by the driver has no effect. However, with pumping control according to the present embodiment, control is performed with the M/C 5 and the W/C 9 in a communicated state, and so it is possible to maintain control by the driver to a certain extent even during pumping control, and there exists an advantage of enhanced drive feeling.

(Second Embodiment)

A second embodiment will be described next.

The present embodiment differs greatly from the above-described first embodiment with respect to the point of being provided with a pump. Further, description of portions similar to the foregoing first embodiment will be omitted or simplified, and identical symbols will be used for like items in the physical structure.

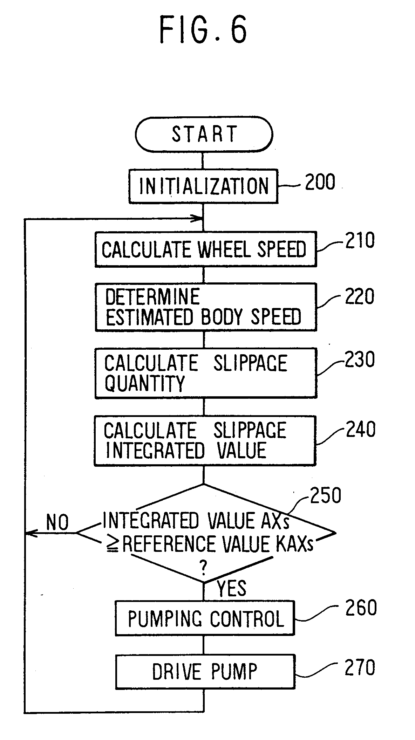

As shown in FIG. 5, a first piping system A on a front-right wheel FR side of brake piping according to the present embodiment is, similarly to the foregoing first embodiment, composed of with conduits A1, A2, and A3. A regulating valve 13 is disposed in the second conduit A2 connecting the first conduit A1 and a reservoir 11. Moreover, with the present embodiment, a pump 31 to pump up brake fluid from the reservoir 11 and supply same to the first conduit A1 side, and check valves 33 and 35 on an upstream side and a downstream side of the pump 31, are disposed in the conduit A3.

According to the present embodiment, as will be described later, in addition to actuation of the regulating valve 13, control to drive the pump 31 is simultaneously performed in a case of pumping control.

Next, pumping control of the present embodiment will be described with reference to the flowchart of FIG. 6. Herein, an example utilizing wheel-slippage integrated value AXs as a determination criterion for performing pumping control will be described.

In step 200 in FIG. 6, processing for initialization setting of known art is performed.

Next, in step 210, wheel speed Vw of each of the several wheels is calculated on a basis of signals from wheel-speed sensors 23 of respective wheels.

Next, in step 220, estimated body speed Vs is determined on a basis of for example the largest among the several wheel speeds Vw under a condition that the change thereof is limited within a predetermined range.

Next, in step 230, wheel-slippage quantity Xs of each of the several wheels is calculated according to the foregoing equation (1) on a basis of the estimated body speed Vs and the several wheel speeds Vw.

Next, in step 240, the wheel-slippage quantities Xs are integrated and wheel-slippage integrated value AXs (after a brake switch 21 has been switched on) is calculated.

Next, in step 250, it is determined whether the wheel-slippage integrated value AXs is not less than a predetermined reference value KAXs indicating that the braking force of the wheel in question (for example the front-right wheel FR) has become large (for example having approached the road-surface limit). When an affirmative determination is made herein, execution advances to step 260; conversely, when a negative determination is made, execution returns to the foregoing step 210.

In step 260, because it has been determined that for example the front-right wheel FR has approached the road-surface limit, the above-described pumping control to repeat actuation and deactuation of the regulating valve 13 is performed. As a result, brake fluid is allowed to escape from the W/C 9 to the reservoir 11, and so W/C pressure is reduced. Therefore, the front-right wheel FR gradually becomes remote from the road-surface limit.

Next, in step 270, the pump 23 is driven to pump up brake fluid from the reservoir 11 and supply same to the first conduit A1, and execution returns to the above-described step 210.

Additionally, during driving of the pump 23, because the M/C 5 and the W/C 9 are in a communicated state, the brake pedal 1 is depressed due to the reduction in M/C pressure when brake fluid is allowed to escape to the reservoir 11. Therefore, M/C pressure and W/C pressure increase by an amount corresponding to the supply by the pump 23. While pumping control is continued, M/C pressure and W/C pressure steadily increase, and together therewith, braking force of the front-right wheel FR increases steadily as well.

In this way, according to the present embodiment, the wheel-slippage integrated value AXs of each of respective wheels is determined. When this wheel-slippage integrated value AXs has become a reference value KAXs or more, pumping control of the regulating valve 13 of for example a front-right wheel FR which has approached the road-surface limit can be performed.

Consequently, in the case of the present embodiment as well, similarly to the above-described first embodiment, control to reduce W/C pressure and reduce the extent of slippage can be performed under a certain extent of control by the driver.

According to the present embodiment in particular, the pump 31 is driven simultaneously with pumping control and brake fluid is pumped from the reservoir 11, and so an effect is demonstrated wherein the reservoir bottoming can be prevented, and pumping control can be performed for a prolonged period.

Additionally, according to the present embodiment, wheel-slippage integrated value AXs is employed as the determination criterion for pumping control, and so there exists an advantage in that accuracy thereof is high compared with a case wherein wheel-slippage quantity Xs is employed.

(Third Embodiment)

A third embodiment will be described next.

The present embodiment differs greatly from the above-described first embodiment with respect to the point of performing antiskid control. Further, description of portions similar to the foregoing first embodiment will be omitted or simplified, and identical symbols will be used for like items in the physical structure.

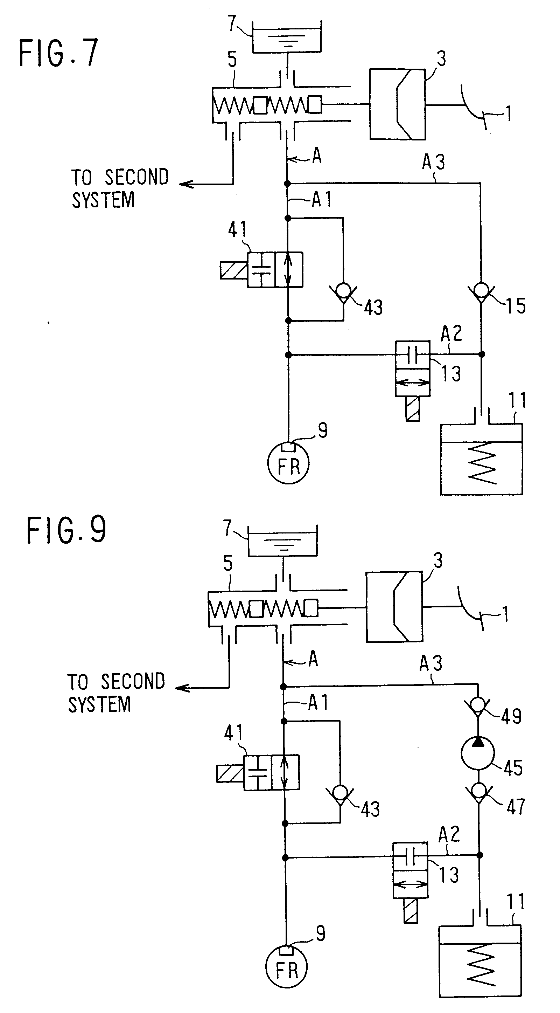

As shown in FIG. 7, a first piping system A on a front-right wheel FR side of brake piping according to the present embodiment is, similarly to the foregoing first embodiment, is composed of the conduits A1, A2, and A3. A regulating valve 13 is disposed in the second conduit A2, and a check valve 15 is disposed in the third conduit A3. Moreover, with the present embodiment, a solenoid (pressure-increasing control) valve 41 to switch communication and interruption of the first conduit A1 and a check valve 43 disposed in parallel with the pressure-increasing control valve 41 are provided.

According to the present embodiment, pumping control and antiskid control can be performed, but pumping control is established so as to be started priorly to the start of antiskid control. Further, during pumping control, the pressure-increasing control valve 41 is set to be in a communicated state ("off" state) and the regulating valve 13 is repeatedly actuated and deactuated, whereas during antiskid control, the pressure-increasing control valve 41 and the regulating valve 13 are driven to perform antiskid control.

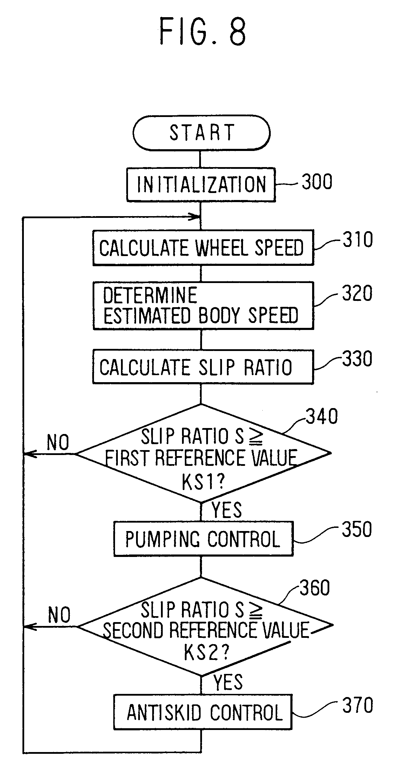

Next, pumping control and antiskid control of the present embodiment will be described with reference to the flowchart of FIG. 8. Herein, an example utilizing slip ratio S as a determination criterion for pumping control and antiskid control will be described.

In step 300 in FIG. 6, processing for initialization setting of known art is performed.

Next, in step 310, wheel speed Vw of each of the several wheels is calculated on a basis of signals from wheel-speed sensors 23 of the respective wheels.

Next, in step 320, estimated body speed Vs is determined on a basis of for example the largest among the several wheel speeds Vw under a condition that the change thereof is limited within a predetermined range.

Next, in step 330, slip ratio S of each of the several wheels is calculated according to the following equation (2) on a basis of the estimated body speed Vs and the several wheel speeds Vw.

$$S = (Vs - Vw) / Vs \qquad (2)$$

Next, in step 340, it is determined whether the slip ratio S is not less than a predetermined first reference value KS1 indicating that the braking force of the wheel in question (for example the front-right wheel FR) has become large (for example having approached the road-surface limit). When an affirmative determination is made herein, execution advances to step 350; conversely, when a negative determination is made, execution returns to the foregoing step 310.

In step 350, because it has been determined that for example the front-right wheel FR has approached close to the road-surface limit, the above-described pumping control to repeat actuation and deactuation of the regulating valve 13 at each iteration of a predetermined time interval is performed.

Next, in step 360, it is determined whether the slip ratio S is not less than a predetermined second reference value KS2 (where KS1 < KS2) indicating that for example the front-right wheel FR has reached the road-surface limit. When an affirmative determination is made herein, execution advances to step 370; conversely, when a negative determination is made, execution returns to the foregoing step 310.

In step 370, the pressure-increasing control valve 41 and the regulating valve 13 are driven, for example the pressure-increasing control valve 41 is actuated and assumes an interrupted state and moreover the regulating valve 13 is actuated and assumes a communicated state, so that antiskid control of known art is performed, and then execution returns to the above-described step 310.

In this way, according to the present embodiment, the slip ratio S of each of the several wheels is determined, and in accordance with the magnitude of this slip ratio S, specifically, pumping control is performed in a case where the slip ratio S is relatively small and antiskid control is performed in a case where the slip ratio S is relatively large. Consequently, brake pedal operation of the driver during vehicle braking (during pumping control) can to a certain extent be reflected in vehicular behavior. Further, wheel locking can reliably be prevented (by antiskid control). Additionally, there exists an advantage in that a locking tendency of the wheels can priorly be suppressed by executing pumping control in advance of antiskid control.

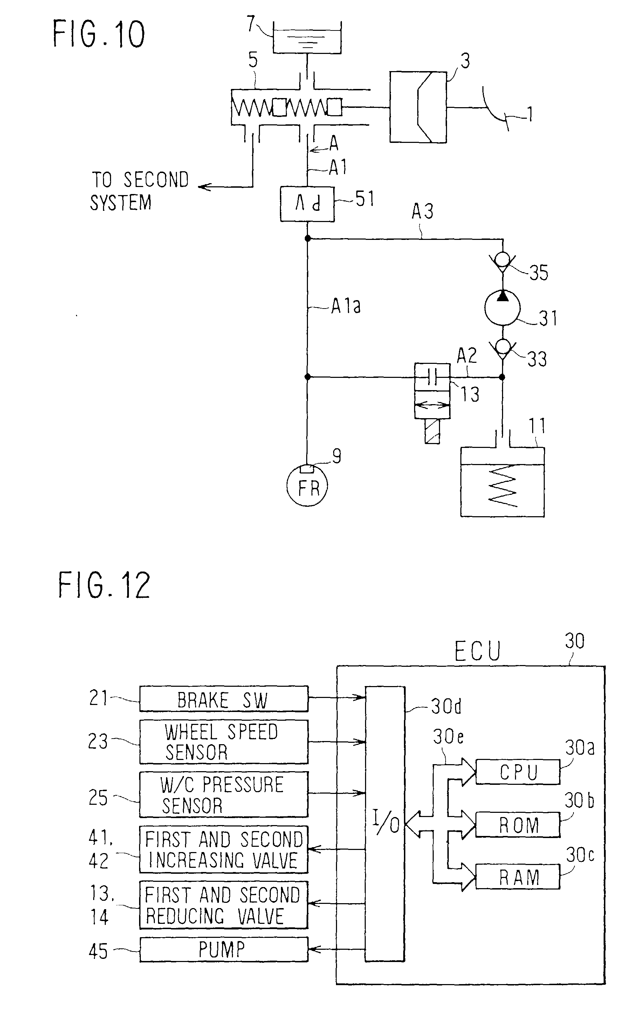

Further, an example having no pump was given in the present embodiment, but as shown in for example FIG. 9, a pump 45 and check valves 47 and 49 may be provided in the third conduit A3. In this case, there exists an advantage wherein the reservoir bottoming can be prevented, as well as, pumping control and antiskid control can be performed for a prolonged period, similarly to the above-described second embodiment.

(Fourth Embodiment)

The present embodiment differs greatly from the above-described second embodiment with respect to the point of being provided with a proportioning control valve. It is to be noted that description of portions similar to the foregoing second embodiment will be omitted or simplified, and identical symbols will be used for like items in the physical structure.

As shown in FIG. 10, a first piping system A on a front-right wheel FR side of brake piping according to the present embodiment is, similarly to the foregoing second embodiment, composed of conduits A1, A2, and A3. A regulating valve 13 is disposed in the second conduit A2, and a pump 31 and check valves 33 and 35 are disposed in the third conduit A3. Moreover, according to the present embodiment, a proportioning control valve (PV) 51 is connected to the conduit A1 in a direction such that the W/C 9 side becomes high in pressure. The discharge side of the pump 31 is connected to a conduit A1a between the proportioning control valve 51 and the W/C 9.

According to the present embodiment, when the pump 31 is driven concurrently with performing pumping control, brake-fluid pressure at the conduit A1a becomes high, W/C pressure can be elevated higher than M/C pressure, and therefore there exists an advantage in that pedal reaction force during driving of the pump 31 can be reduced.

Further, the present invention is not exclusively limited to the above-described embodiments, but can of course be embodied in various modes within the scope of the present invention.

For example, wheel-slippage quantity Xs was utilized in the foregoing first embodiment and wheel-slippage integrated value AXs was utilized in the foregoing second embodiment as the determination criterion for performing pumping control, but determination criteria which will be described hereinafter can be used.

For example, vehicle-body deceleration determined by calculation from the wheel speed of each of the several wheels or vehicle-body deceleration G measured utilizing a G sensor can be employed as the determination criterion. In this case, the wheels are regarded as having approached a road-surface limit in a case where vehicle-body deceleration G has become a reference value or more, and at that time pumping control is performed.

M/C pressure can be employed as the determination criterion. In this case, a majority of wheels are regarded as having approached a road-surface limit in a case where M/C pressure detected by an M/C sensor similar to W/C sensors has become a reference value or more, and at that time pumping control is performed.

W/C pressure of the several wheels can be employed as the determination criterion. In this case, the wheels are regarded as having approached for example a road-surface limit in a case where W/C pressure detected by a W/C sensor 25 has become a reference value or more, and pumping control is performed.

Additionally, according to the present embodiment, pumping control by the regulating valve 13 was executed for each of the several wheels, but pumping control may be performed for each of several piping systems or en bloc for all wheels. In this case, an average value of a determination criterion such as wheel-slippage quantity or the like of two wheels in respective piping systems (or all wheels) can be utilized to determine the timing with which pumping control is started.

Furthermore, a case wherein a driver operates a brake pedal was given in the foregoing several embodiments, but the present invention can be applied also in an automatic brake such that an operating member automatically compresses a master cylinder.

(Fifth Embodiment)

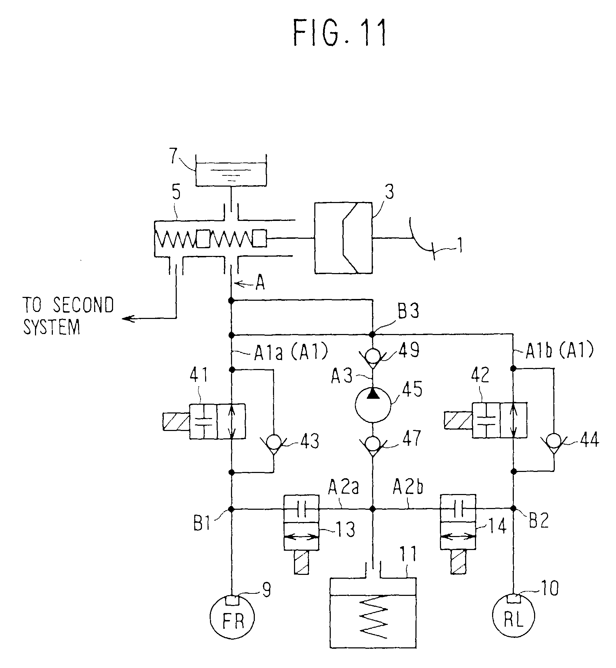

In FIG. 11, a brake pedal 1 depressed by a driver when applying braking force to the vehicle is connected to a booster 3, and depression force applied to the brake pedal 1 and pedal stroke are conveyed to the booster 3.

A master cylinder (M/C) 5 is a device to apply brake-fluid pressure boosted by the booster 3 to the entirety of the brake piping, and a master reservoir 7 to accumulate brake fluid is disposed in this master cylinder 5.

Master-cylinder pressure (M/C pressure) generated by the foregoing master cylinder 5 is conveyed to brake fluid within a first piping system A linking the master cylinder 5, a first wheel cylinder (W/C) 9 disposed in the front-right wheel FR to impart braking force to this wheel, and a second wheel cylinder 10 disposed in the rear-left wheel RL to impart braking force to this wheel. Master-cylinder pressure is similarly conveyed also to a second piping system linking respective wheel cylinders disposed in the front-left wheel and the rear-right wheel to the master cylinder 5, but because structure similar to the first piping system A can be employed, detailed description will be omitted.

The above-mentioned first piping system A is, on the front-right wheel FR side, composed of a first conduit A1a communicating the master cylinder 5 and the first wheel cylinder 9, in which a solenoid (first pressure-increasing control) valve 41 to control opening and closing of the first conduit A1a is disposed, a second conduit A2a branching from a branching point B1 between the first pressure-increasing control valve 41 and the first wheel cylinder 9 and extending to a reservoir 11, in which a solenoid valve (first pressure-reducing control valve = first regulating valve) 13 to control opening and closing of the conduit A2a is disposed. A check valve 43 is disposed in parallel with the first pressure-increasing control valve 41.

Similarly, on the rear-left wheel RL side, the first piping system A includes a conduit A1b communicating the master cylinder 5 and the second wheel cylinder 10, in which a solenoid valve (second pressure-increasing control valve) 42 to control opening and closing of the conduit A1b is disposed, and a second conduit A2b branching from a branching point B2 between the second pressure-increasing control valve 42 and the second wheel cylinder 10 and extending to a reservoir 11, in which a solenoid valve (second pressure-reducing control valve = first regulating valve) 14 to control opening and closing of the conduit A2b is disposed. A check valve 44 is disposed in parallel with the second pressure-increasing control valve 42.

Furthermore, in a third conduit A3 extending from the reservoir 11 in parallel with the several control valves 13, 14, 41 and 42 to a branching point B3 of a conduit A1 (communicated with the master cylinder 5), a pump 45 to pump up brake fluid from the reservoir 11 to a first conduit A1 side, and check valves 47 and 49 disposed on an upstream side and a downstream side of the pump 45 are provided.

With the above-described structure, in a case where antiskid control is performed for the front-right wheel FR and the rear-left wheel RL, the respective wheel cylinders are subject to a known pressure-increase, maintaining, or pressure-reduction state by opening and closing control of the several control valves 13, 14, 41 and 42, whereby braking force of each of wheels is regulated.

In particular, according to the present embodiment, as will be described later, brake fluid is moved between the first and second wheel cylinders 9 and 10 by driving the respective pressure-reducing control valves 13 and 14 and the pump 45 to perform regulating control for regulating the respective wheel-cylinder pressures (hereinafter termed the first and second wheel-cylinder pressures). In this case, the two pressure-increasing control valves 41 and 42 are off and the first conduit A1 (A1a and A1b) is communicated, the pressure-reducing control valve 13 or 14 on a side of whichever wheel is close to a road-surface limit is actuated to communicate the second conduit A2a or A2b, and along with this, the pump 45 is driven.

Electrical structure of the present embodiment will be described next.

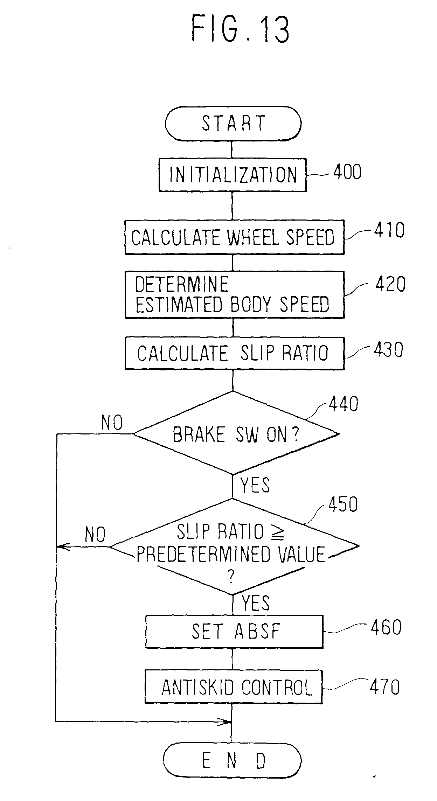

The above-described antiskid control and regulating control are performed by an electronic control unit (ECU) 30 shown in FIG. 12.

This ECU 30 is structured by a microprocessor provided with a CPU 30a, a ROM 30b, a RAM 30c, an input/output portion 30d, a bus line 30e, and the like of known art.

A brake switch 21 to detect when the brake pedal 1 has been depressed, wheel-speed sensors 23 to detect wheel speed of each of the several wheels, and W/C-pressure sensors 25 to detect wheel-cylinder pressure of each of the several wheels are connected to the input/output portion 30d. Additionally, the first and second pressure-increasing control valves 41 and 42, the first and second pressure-reducing control valves 13 and 14, and the pump 45 are connected to the input/output portion 30d.

Control processing performed by this ECU 30 will be described next.

Firstly, control processing to initiate antiskid control will be described with reference to the flowchart in FIG. 13.

In step 400 in FIG. 13, processing for initialization setting of known art, such as clearing flags, is performed.

Next, in step 410, wheel speed VW of the several wheels is calculated on a basis of signals from the wheel-speed sensors 23 of the respective wheels.

Next, in step 420, estimated body speed Vs is determined on a basis of for example the largest among the several wheel speeds VW under a condition that the change thereof is limited within a predetermined range.

Next, in step 430, a slip ratio SW of each of the several wheels is calculated according to the foregoing equation (2) on a basis of the estimated body speed Vs and the several wheel speeds VW.

Next, in step 440, it is determined whether the brake switch 21 is on. That is to say, it is determined whether the brake pedal 1 has been depressed. Herein, execution advances to step 450 when an affirmative determination is made; conversely, the present processing is terminated for the time being when a negative determination is made.

In step 450, it is determined whether the wheel slip ratio SW of the wheel which is the control target is a predetermined value or more, that is to say, whether the state is such that antiskid control should be performed. Herein, execution advances to step 460 when an affirmative determination is made; conversely, the present processing is terminated for the time being when a negative determination is made.

In step 460, because the condition for starting antiskid control has been fulfilled, a flag ABSF indicating that antiskid control is in progress is set.

Next, in step 470, the respective pressure-increasing control valves 41 and 42 and pressure-reducing control valves 13 and 14 are driven according to the wheel slip ratio SW of the control-target wheel. That is to say, antiskid control of known art is performed to control the wheel-cylinder pressure, and the present processing is terminated for the time being.

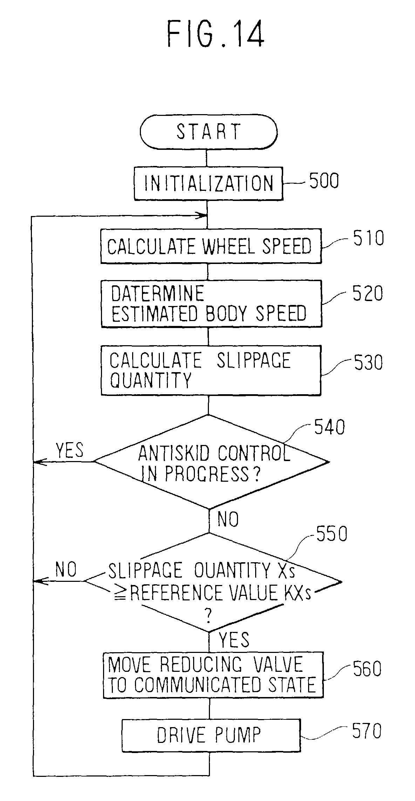

Next, regulating control which is an essential portion of the present embodiment will be described with reference to the flowchart in FIG. 14. Herein, an example wherein regulating control is performed on a basis of a wheel-slippage quantity Xs will be described.

In step 500 in FIG. 14, processing for initialization setting of known art is performed.

Next, in step 510, wheel speed VW of each of the several wheels is calculated on a basis of signals from the wheel-speed sensors 23 of the respective wheels. Further, the value determined in the above-described step 410 can be used without change as this wheel speed VW.

Next, in step 520, estimated body speed Vs is determined on a basis of for example the largest among the several wheel speeds VW under a condition that the change thereof is limited within a predetermined range. Note that the value determined in the above-described step 420 can be used without change as this estimated body speed Vs.

Next, in step 530, wheel-slippage quantity Xs of each of the several wheels is calculated according to the foregoing equation (1) on a basis of the estimated body speed Vs and the several wheel speeds VW.

Next, in step 540, it is determined whether antiskid control is presently in progress by determining whether the above-described flag ABSF is 1; when determined hereat that antiskid control is in progress, execution returns to the above-described step 510; conversely, when determined not to be so, execution advances to step 550. Further, it is possible also to omit this determination of whether antiskid control is in progress.

In step 550, it is determined whether the wheel in question has reached the road-surface limit by determining whether wheel-slippage quantity Xs calculated in the foregoing step 230 is a reference value KXs or more. When determined hereat that the wheel has been approached road-surface limit, execution advances to step 560; conversely, when determined not to be so, execution returns to the above-described step 510.

Further, this reference value KXs is established at a value such that timing for performing regulating control comes to be earlier than timing for performing antiskid control. Consequently, because regulating control is executed in advance of antiskid control, antiskid control may not be performed, depending on the case.

In step 560, because it was determined in the foregoing step 550 that the wheel in question (described with the front-right wheel FR taken as an example in description hereinafter) has approached the road-surface limit, the first pressure-reducing control valve 13 is caused to assume a communicated state, whereby brake fluid is allowed to escape via the branching point B1 of the first conduit A1a from the first wheel cylinder 9 and the like to the reservoir 11, and the first wheel-cylinder pressure is reduced. Thus, the front-right wheel FR moves away from the road-surface limit.

Next, in step 570, the pump 45 is driven, brake fluid is pumped up from the reservoir 11 and supplied via the branching point B3 to the first conduit A1 (A1a and A1b), and execution returns to the above-described step 510.

At this time, because the second pressure-increasing control valve 42 on the rear-left wheel RL side is in a communicated state, and moreover the second pressure-reducing control valve 14 is in an interrupted state, brake fluid supplied to the first conduit A1 side is supplied via the conduit A1b to the second wheel cylinder 10: Therefore, the second wheel-cylinder pressure increases, and so the braking force of the rear-left wheel RL is heightened.

It is to be noted that brake fluid supplied to the first conduit A1 by the pump 45 is supplied not solely to the second wheel cylinder 10 but also to the first wheel cylinder 9. However, because the brake fluid is allowed to escape from the first wheel cylinder 9 to the reservoir 11, the first wheel-cylinder pressure is reduced and the second wheel-cylinder pressure is increased.

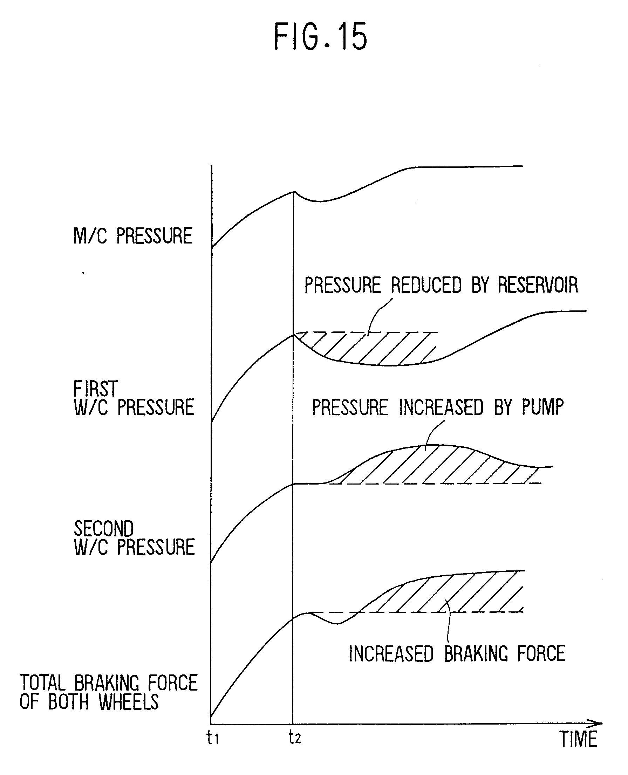

Fluctuation in brake-fluid pressure and the like due to the above-described pumping control will be described next with reference to FIG. 15.

As shown in FIG. 15, when the brake pedal 1 is depressed with a certain timing (time t1), the master-cylinder pressure, the first wheel-cylinder pressure, and the second wheel-cylinder pressure gradually rise, whereby the brake is applied to the wheels. Although not illustrated, the wheel speeds VW decline and the wheel-slippage quantities Xs gradually increase.

Accordingly, when for example at the front-right wheel FR the wheel-slippage quantity Xs surpasses the reference value KXs (time t2), solely the first pressure-reducing control valve 13 is driven and assumes a communicated state while the first and second pressure-increasing control valves 41 and 42 are in a communicated state and moreover the second pressure-reducing control valve 14 is in an interrupted state. As a result, brake fluid flows out of the first wheel cylinder 9 side and the first wheel-cylinder pressure rapidly falls.

At this time (time t2), the pump 45 is driven and brake fluid is supplied from the reservoir 11 to the first conduit A1. Therefore, a considerable quantity of brake fluid is supplied to the second wheel cylinder 10, and so the second wheel-cylinder pressure is increased.

Consequently, total braking force of both wheels temporarily declines due to the reduction of first wheel-cylinder pressure, but thereafter the second wheel-cylinder pressure is increased, and so the total braking force is increased as a result.

In this way, according the present embodiment, the wheel-slippage quantity Xs for the several wheels is determined. In a case where this wheel-slippage quantity Xs of for example the front-right wheel FR has become the reference value KXs or more, the wheel braking force thereof is regarded as having approached the road-surface limit. Because of this, the first pressure-reducing control valve 13 is driven so that brake fluid is allowed to escape from the first wheel cylinder 9 side to the reservoir 11. In addition, the pump 45 is driven to increase the second wheel-cylinder pressure provided to the rear-left wheel RL.

As a result, the front-right wheel FR moves away from the road-surface limit, and so does in the deterioration to wheel locking; meanwhile, braking force of the rear-left wheel RL (which is still distant from the road-surface limit) is heightened, and so braking force of the entire vehicle comes to be heightened as a result.

Conventionally, in a case such as this, antiskid control of the front-right wheel FR is immediately started and braking operation by the driver is lost. However, according to the present embodiment, because there is for the time being movement away from a state of entry into antiskid control due to brake fluid being moved, braking operation by the driver is elevated, and so there exists an advantage of enhanced drive feeling.

It is to be noted that antiskid control termed in the above embodiment represents control in which, when it has been determined that a control target wheel is in a locking state on a basis of comparison of the wheel-slippage quantity Xs and a reference value which has been set to be higher than the reference value KXs, the wheel cylinder pressure of the control target wheel is reduced while brake fluid is prohibited to flow from the master cylinder 5 to the wheel cylinder 9, and thereafter, the wheel cylinder pressure is maintained and increased in accordance to the wheel-slippage quantity Xs and the like.

During antiskid control in which brake fluid is prohibited to flow from the master cylinder to the wheel cylinder, the driver only feel kickback due to fluctuation in brake fluid pressure caused by the pump. On contrary, in regulating control according to the present embodiment, because the master cylinder pressure as well as the wheel cylinder pressure are reduced, after the brake pedal in pulled in due to drop of the master cylinder pressure, the driver receives kickback from the brake pedal due to the discharge from the pump and the pressure-reducing control valve moved to an interrupted state. As a result, the driver feels less kickback from the brake pedal due to inertia acting on the driver's leg by pulling the brake pedal. Therefore, regulating control has an advantage that the brake pedal feeling of the driver can be improved comparing to the conventional antiskid control.

Further, in this regulating control, the pressure-reducing control valve may be switched to a communicated state and an interrupted state for every predetermined interval (for example, every 20mm/s) in step 560. In this case, it can be prevented that the brake pedal is excessively pulled in due to drop of the master cylinder pressure. As a result, it can be avoided that the stroke of the brake pedal is made large, whereby a master piston within the master cylinder is moved to a far-end position. However, while the pressure-reducing control valve is switched to the communicated state and the interrupted state every predetermined interval, if the slipping state of the wheel becomes large, antiskid control is performed. In antiskid control, the pressure-increasing control valve is controlled to an interrupted state, so that sufficient brake fluid quantity can be reduced from the wheel cylinder of the control target wheel.

Moreover, the driving of the pump in step 570 may be executed prior to setting the pressure-reducing control valve in the communicated state in step 560. That is to say, in consideration of a predetermined time lag between driving and discharging of the pump, a control signal to drive the pump may be generated in advance.

It is to be noted that, even when a control signal to move the pressure-reducing control valve to the communicated state is generated prior to a control signal to drive the pump as described in the fifth embodiment, because there is a very little difference in time between two control signals, no adverse effect is caused to brake pressure control.

Moreover, the present embodiment can be carried out without the vehicle being exclusively restricted to a time of forward travel or of turning.

Further, according to the present embodiment, it was determined whether antiskid control is in progress, but regulating control may be carried out without performing this determination with respect to antiskid control, that is to say, by performing determination of regulating control separately from antiskid control.

(Sixth Embodiment)

A sixth embodiment will be described next.

The present embodiment differs greatly from the above-described fifth embodiment with respect to the point of not being provided with a structure to perform antiskid control. Further, description of portions similar to the foregoing fifth embodiment will be omitted or simplified, and identical symbols will be used for like items in the physical structure.

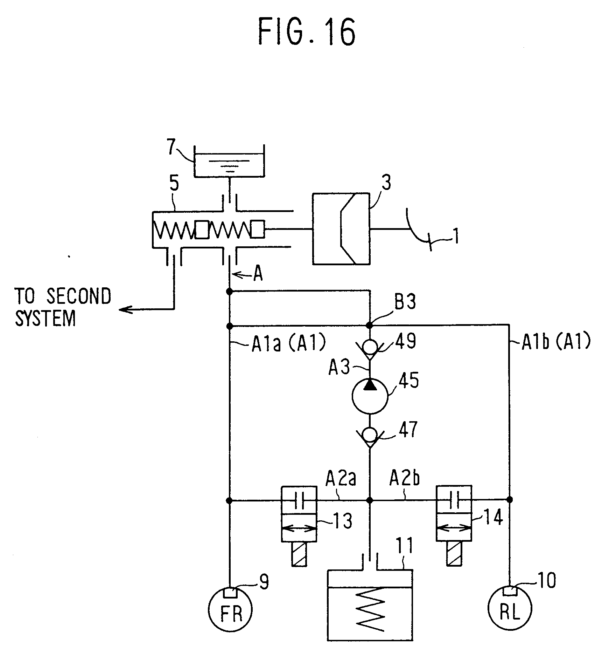

As shown in FIG. 16, conduits A1, A2, and A3 forming a first piping system A of brake piping according to the present embodiment is provided with first and second wheel cylinders 9 and 10, first and second pressure-reducing control valves 13 and 14, a reservoir 11, a pump 45, check valves 47 and 47, and the like. With the present embodiment in particular, antiskid control is not performed, and so the pressure-increasing control valves of the above-described fifth embodiment are not provided.

Consequently, according to the present embodiment, as will be described later, control to drive the pump 45 is performed when at least one of the pressure-reducing control valves 13 and 14 are in a communicated state.

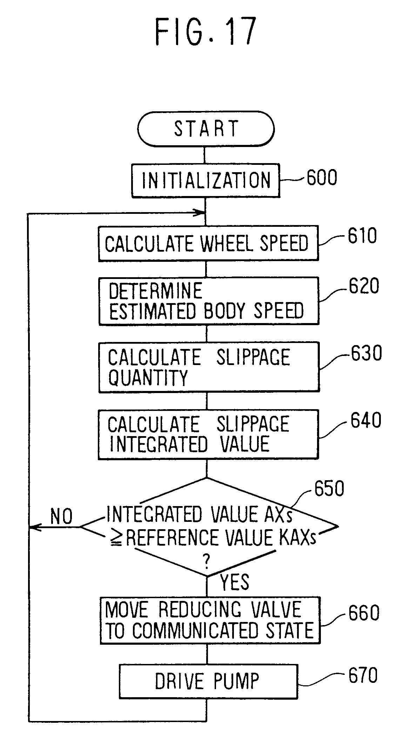

Next, regulating control of the present embodiment will be described with reference to the flowchart of FIG. 17. Herein, an example utilizing wheel-slippage integrated value AXs as a determination criterion for regulating control will be described.

In step 600 in FIG. 17, processing for initialization setting of known art is performed.

Next, in step 610, wheel speed VW of each of the several wheels is calculated on a basis of signals from wheel-speed sensors 23 of respective wheels.

Next, in step 620, estimated body speed Vs is determined on a basis of for example the largest among the several wheel speeds VW under a condition that the change thereof is limited within a predetermined range.

Next, in step 630, wheel-slippage quantity Xs of each of the several wheels is calculated according to the foregoing equation (1) on a basis of the estimated body speed Vs and the several wheel speeds VW.

Next, in step 640, the wheel-slippage quantities Xs are integrated and wheel-slippage integrated value AXs (after a brake switch 21 has been switched on) is calculated.

Next, in step 650, it is determined whether the wheel-slippage integrated value AXs is not less than a predetermined reference value KAXs indicating that the wheel in question (for example the front-right wheel FR) has approached the road-surface limit. When an affirmative determination is made herein, execution advances to step 660; conversely, when a negative determination is made, execution returns to the foregoing step 610.

In step 660, because it has been determined that for example the front-right wheel FR has approached the road-surface limit, the first pressure-reducing control valve 13 is caused to assume a communicated state. Due to this, brake fluid is allowed to escape from the first wheel cylinder 9 to the reservoir 11 so that the first wheel-cylinder pressure is reduced. Therefore, the front-right wheel FR gradually becomes remote from the road-surface limit.

Next, in step 670, the pump 45 is driven to pump up brake fluid from the reservoir 11 and supply same to the first conduit A1 via the branching point B3, and execution returns to the above-described step 610.

At this time, brake fluid supplied to the first conduit A1 side is supplied not only to the conduit A1a side but also via the conduit A1b side. In this case, because the second pressure-reducing control valve 14 of the rear-left wheel RL side is in an interrupted state, the second wheel-cylinder pressure is increased. Therefore, the braking force of the rear-left wheel RL is heightened.

In this way, according to the present embodiment, the wheel-slippage integrated value AXs for the respective wheels is determined. In a case where this wheel-slippage integrated value AXs has become a reference value KAXs or more, the pressure-reducing control valve 13 or 14 of a wheel which has approached the road-surface limit and the pump 45 are driven. Due to this, one of the first and second wheel-cylinder pressures is reduced, and along with this, the other wheel-cylinder pressure is increased.

Consequently, in the case of the present embodiment as well, similarly to the above-described fifth embodiment, an effect is demonstrated wherein the total braking force of the left-hand and right-hand wheels in the piping system A thereof is improved.

According to the present embodiment in particular, because wheel-slippage integrated value AXs is employed as the determination criterion for regulating control, there exists an advantage in that accuracy thereof is high compared with a case wherein wheel-slippage quantity Xs is employed.

Further, an effect exists even when solely one or the other of the conduit A2a in which the first pressure-reducing control valve 13 is disposed or the conduit A2b in which the second pressure-reducing control valve 14 is disposed is provided. For example, in a case where the first pressure-reducing control valve 13 and the conduit A2a are provided, improvement of the braking force of the rear-left wheel RL and prevention of locking of the front-right wheel FR both become possible. Meanwhile, in a case where the second pressure-reducing control valve 14 and the conduit A2b are provided, achieving improvement of the braking force of the front-right wheel FR, prevention of locking of the rear-left wheel RL, and improvement of stability becomes possible.

(Seventh Embodiment)

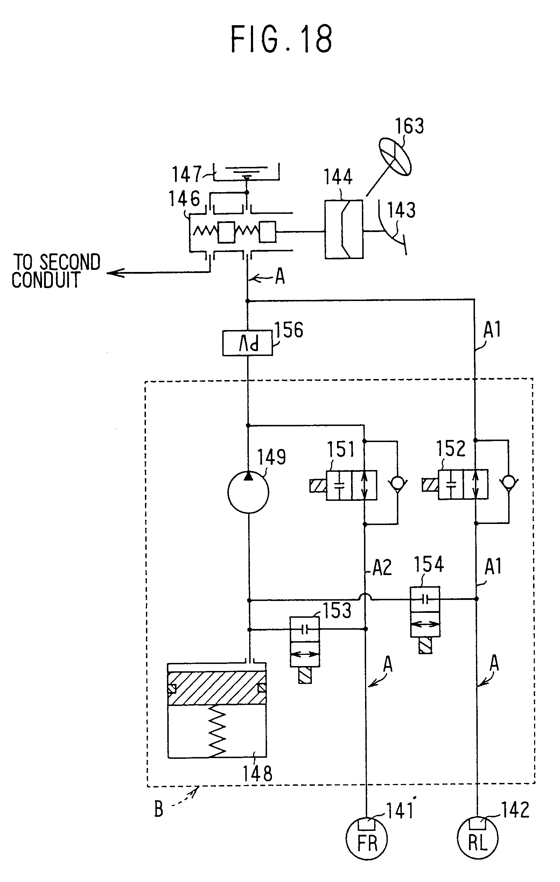

A seventh embodiment will be described next with reference to FIG. 18 through FIG. 22.

FIG. 18 illustrates a brake system structure according to the present embodiment. This brake system is a system of diagonal piping made up of a first piping system A leading to respective wheel cylinders 141 and 142 of front-right wheel FR and rear-left wheel RL and a second piping system not illustrated leading to respective wheel cylinders of front-left wheel FL and rear-right wheel RR.

With this structure, a vacuum booster 144 to boost pedal stroke of a brake pedal 143 depressed and operated by a driver or the driver's depression force with utilizing intake-manifold vacuum of the engine is provided. Master-cylinder pressure PM is generated in a master cylinder 146 according to the output of this vacuum booster 144. That is, a brake-fluid pressure-generating device is made up by the brake pedal 143, master cylinder 146, and so on.

The master cylinder 46 is provided with an independent master reservoir 147. The first piping system A and the second piping system extend independently from this master cylinder 146. Note that, because the first piping system A and the second piping system employ a similar structure, illustration and description of the second piping system will be omitted.

The first piping system A includes a first conduit A1 which branches from a point between the master cylinder 146 and a proportioning control valve 156, and is connected to a (second) wheel cylinder 142 on the rear-left wheel RL side and a second conduit A2 which branches from a point between the proportioning control valve 156 and a pump 149, and is connected to a (first) wheel cylinder 41 on the front-right wheel FR side.

An actuator B for performing antiskid control enclosed by dotted lines in FIG. 18 is disposed in the first piping system A. This actuator B for antiskid control is made up of the pump 149 disposed so as to discharge brake fluid pumped from a reservoir 148 to the second conduit A2, (first and second) pressure-increasing control valves 151 and 152, and (first and second) pressure-reducing control valves 153 and 154. Further, in description hereinafter, distinction between first and second for the wheel cylinders 141 and 142, the pressure-increasing control valves 151 and 152, and the pressure-reducing control valves 153 and 154 will be omitted.

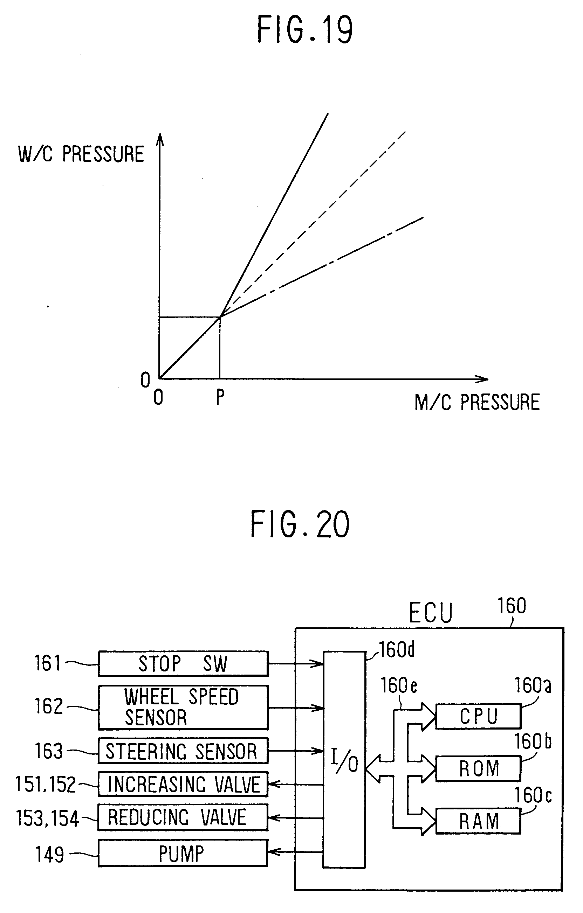

The foregoing pressure-increasing control valves 151 and 152 are disposed respectively in the first and second conduits A1 and A2, and the positions of these pressure-increasing control valves 151 and 152 are caused to be the communicated position shown in the drawing at a time of ordinary braking. Accordingly, when the respective pressure-increasing control valves 151 and 152 have received an electrical-power supply from a predetermined electrical-power supply source in response to control signals from an ECU 60 (refer to FIG. 20), the respective pressure-increasing control valves 151 and 152 are changed to an "on" state and the respective valve positions become an interrupted position.

Meanwhile, the pressure-reducing control valves 153 and 154 are disposed in conduits linking the respective wheel cylinders 141 and 142 and a reservoir 148, and the positions of these pressure-reducing control valves 153 and 154 are caused to be the interrupted position shown in the drawing at a time of ordinary braking. The positions of these pressure-reducing control valves 153 and 154 are caused to be the interrupted position in an "on" state when an electrical-power supply has been received. Each of these several valves 151, 152, 153, and 154 is a two-port, two-way valve, and is made up of an electromagnetic valve a valve body of which is moved by excitation magnetic force of an electromagnetic solenoid.

Additionally, the proportioning control valve 156 is disposed more to a master cylinder 46 side than the connection destination of pump discharge to the conduit A2. This proportioning control valve 156 can employ a device of known structure disposed conventionally in a conduit on a rear-wheel side. As a conventional method of usage of this proportioning control valve 156, when master-cylinder pressure PM has become a predetermined split-point pressure P or more, the master-cylinder pressure PM which is a base pressure as shown by the single-dotted line in FIG. 19 is attenuated at a predetermined attenuation ratio and causes flow to the wheel cylinder for a rear wheel.

With the present embodiment, the proportioning control valve 156 having a mode of operation as described above is connected in reverse compared with the conventional method so that the base pressure comes to be on the wheel cylinder 141 side. That is to say, as shown by solid lines in FIG. 19, when the master-cylinder pressure PM and the wheel-cylinder pressure PW are the split-point pressure P or more, the master-cylinder pressure PM relative to the wheel-cylinder pressure PW is attenuated at a predetermined attenuation ratio so that the wheel-cylinder pressure PW becomes higher than the master-cylinder pressure PM. It is possible for the proportioning control valve 156 to maintain the pressure of the wheel cylinder 141 side higher than the master-cylinder pressure PM due to this attenuating effect.

As shown in FIG. 20, an ECU (electronic control unit) 160 is provided with a CPU 160a, a ROM 160b, a RAM 160c, an input/output portion 160d, and the like of known art. The ECU 160 performs various computations on signals from a stop switch 161, a wheel-speed sensor 162, a steering sensor 164 to detect a turning angle ω of a steering wheel 163 (refer to FIG. 18), and the like, and outputs signals for driving the pressure-increasing control valves 151 and 152, the pressure-reducing control valves 153 and 154, a pump 149, and so on.

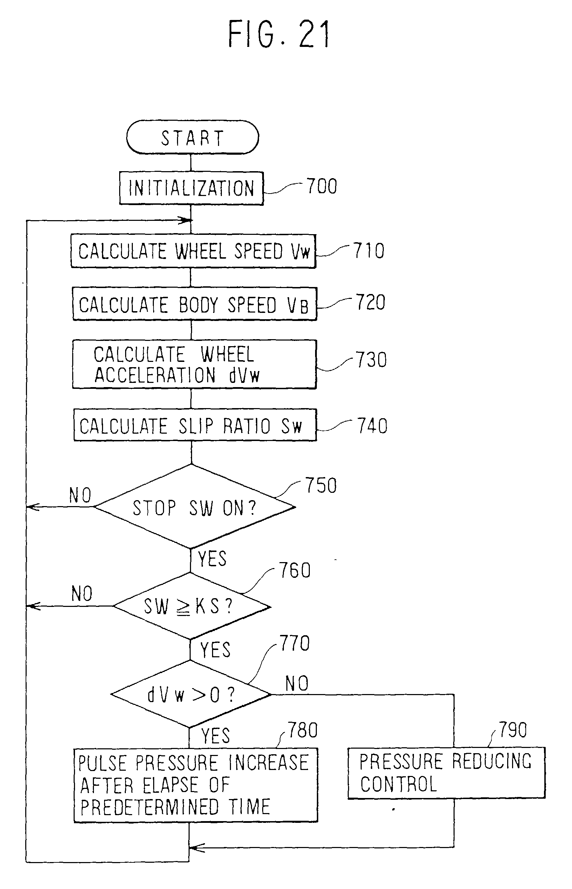

Flow of control performed by this ECU 160 will be described next with reference to the flowchart in FIG. 21.

Control flow is started in accompaniment to an "on" operation or the like of an ignition switch of a vehicle not illustrated, and in step 700 initialization settings of various flags and so on are executed.

In step 710, wheel speed VW of each of the several wheels is calculated on a basis of output signals from the wheel-speed sensors 162.

In step 720, vehicle-body speed VB is calculated on a basis of the wheel speeds VW of the several wheels and so on. Further, as the vehicle-body speed VB, for example a maximum value of the wheel speeds VW may be utilized, or an estimated body speed Vs being the largest among the several wheel speeds VW under a condition that the change thereof is limited within a predetermined range as in the above-described fifth embodiment may be utilized.

In step 730, wheel acceleration dVW of the wheel which is the target of control is computed. Note that this flow of control is sequentially performed to all of the wheels.

In step 740, a slip ratio SW of the wheel which is the target of control of the present flow is computed utilizing for example the foregoing equation (2) on a basis of the wheel speed VW, the body speed VB, and the like.

In step 750, it is determined on a basis of an output signal from the stop switch 161 whether the stop switch 161 is in an "on" state. Herein, execution returns to step 710 in a case where a negative determination has been made; conversely, execution advances to step 760 in a case where an affirmative determination has been made.

In step 760, it is determined whether the slip ratio SW of the wheel which is the control target is a predetermined slip ratio KS (for example 15 to 20%) or more.

Herein, execution returns to step 710 in a case where a negative determination has been made; conversely, execution advances to step 770 in a case where an affirmative determination has been made.

In step 770, it is determined whether the wheel acceleration dVW of the wheel which is the control target is a positive value (i.e., whether greater than 0). Herein, execution advances to step 780 in a case where an affirmative determination has been made; conversely, execution advances to 790 in a case where a negative determination has been made.

In step 780, the wheel which is the control target is taken to be in a tendency to recover from a slipping state, pulse pressure increase is performed from this time for a predetermined time interval or for a predetermined number of pulses with consideration for the wheel's inertial moment and so on, and thereafter execution returns to step 710.

Further, this pulse pressure increase is, when pulse pressure-increasing for example the wheel cylinder 42, control for increasing the wheel cylinder pressure PW by switching electrical conduction to the pressure-increasing control valve 152 on and off at each iteration of a predetermined time interval to repeat a communicated and interrupted position thereof while the pressure-reducing control valve 54 is maintained in the interrupted position of the "off" state. Additionally, so-termed maintaining control to maintain pressure may be performed for a predetermined time interval priorly to the pulse pressure increase.

Meanwhile, in step 790, the slippage state of the wheel which is the control target is taken to be excessive, pressure-reducing control is performed on the brake-fluid pressure applied to the wheel cylinder of the wheel which is the control target, and thereafter execution returns to step 710. For example, when the wheel which is the control target is the rear-left wheel RL and the slippage state of this rear-left wheel RL is excessive, the pressure-increasing control valve 152 is switched to be the "on" state and assumes an interrupted position, and the pressure-reducing control valve 154 is switched to be "on" state and assumes a communicated position. Due to this, the brake-fluid pressure which was being applied to the wheel cylinder 141 is pressure-reduced and brake fluid flows from the wheel cylinder 141 toward the reservoir 48. Further, along with antiskid control being initiated in this step 790, electrical conduction to the pump 149 is initiated and drive thereof is started. Drive of the pump 149 is sustained until termination of antiskid control.

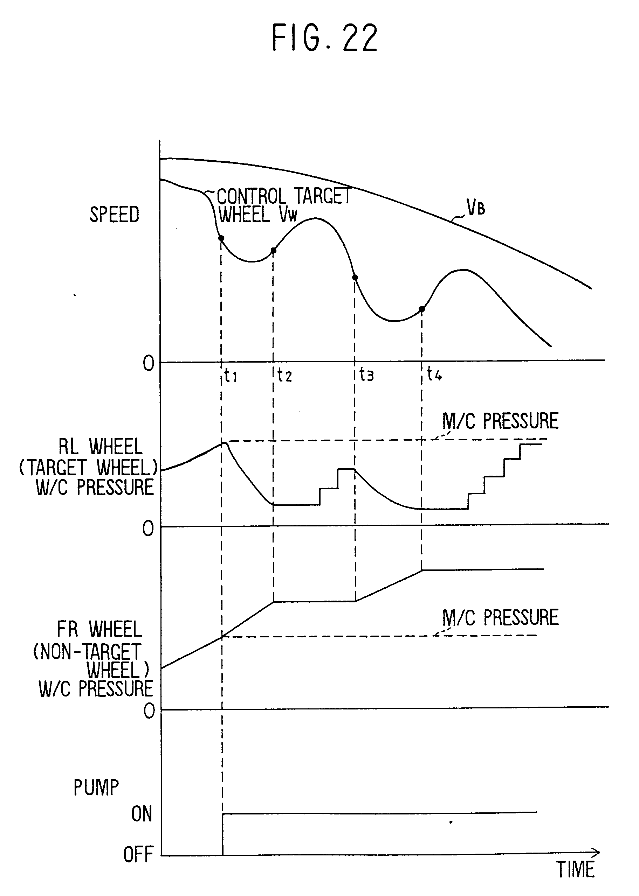

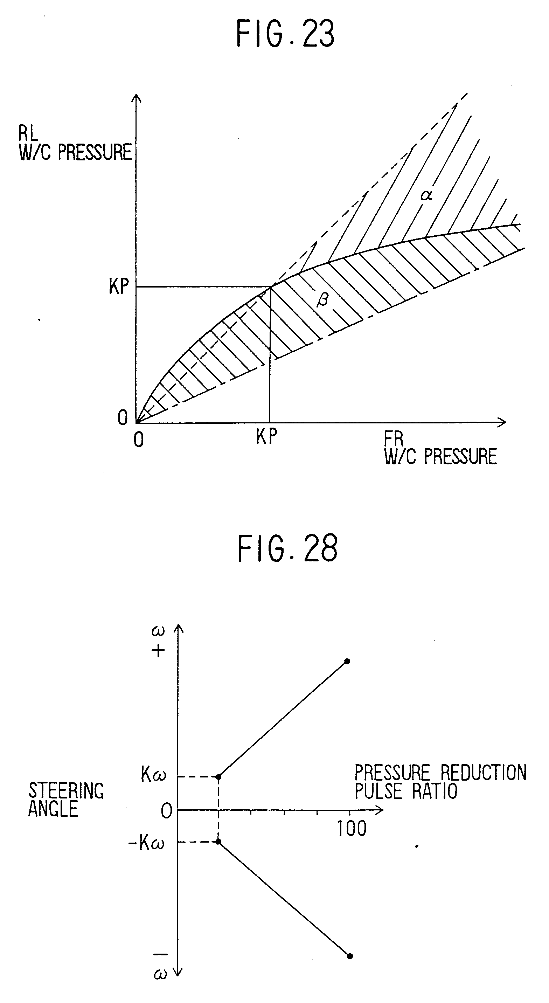

A mode of operation and effects due to the above-described control will be described next with reference to FIG. 22 and FIG. 23.

In the time chart illustrated in FIG. 22, when the wheel slip ratio SW becomes a predetermined slip ratio KS or more and antiskid control (ABS control) is initiated at time t1 during vehicle braking, the wheel which is the control target of antiskid control is subjected to pressure-reducing control until time t2. At this time, when the wheel braking-force distribution of the front and rear wheels is established as a vehicle rating as shown by the dotted line in FIG. 23, the rear wheels come to priorly fall into a locking tendency. Further, ordinarily rear-wheel prior locking is avoided because stability of the vehicle body deteriorates. However, because vehicle-body stability can be ensured when provided with antiskid control, the front and rear braking-force distribution as shown by the dotted line in FIG. 23 can be established.

The solid line shown in FIG. 23 is a theoretical braking-force distribution line. That is to say, when distribution of wheel braking force at the front and rear wheels is on this distribution line, braking-force distribution is such that the front and rear wheels are locked simultaneously. Further, the wheel braking force of the front wheels and of the rear wheels differs according to wheel-cylinder diameter, brake-pad area, or the like even when equivalent brake-fluid pressure has been applied to the wheel cylinder, but in order to simplify description herein, wheel braking force of the front and rear wheels will be taken as demonstrating similar wheel braking force when the brake-fluid pressure applied to the respective wheel cylinders is equivalent.

With respect to this theoretical braking-force distribution line (solid line), in an ordinary vehicle, a front and rear braking-force distribution line as shown by the single-dotted broken line in FIG. 23 is established utilizing an effect of the proportioning control valve such as is indicated by the single-dotted broken line in the foregoing FIG. 19. That is to say, when the horizontal axis is taken to be front-wheel braking force (front-wheel wheel-cylinder pressure PW) and the vertical axis to be rear-wheel braking force (rear-wheel wheel-cylinder pressure PW) in a realistic range of wheel-cylinder pressure PW, the wheel braking-force ratio which the front and rear wheels exhibit is established on the front-wheel priorly locking side which is below the theoretical braking-force distribution line.

In contrast to this, in the present embodiment, the front and rear braking-force distribution is established as indicated by the dotted line in FIG. 23. At this time, the braking force of the rear-wheel side exceeds the front-wheel side at a time of wheel-cylinder pressure PW = KP (= master-cylinder pressure PM) when the wheel braking force of the front and rear wheels becomes a predetermined value or more. Thus, in a case where wheel braking force has been demonstrated at this brake-fluid pressure KP or more, the rear-wheel side locks in advance of the front wheels, according to the road-surface state (corresponding to region $\alpha$).

Accordingly, when establishment of braking-force distribution such as this is performed for the vehicle, antiskid control is executed at the wheel cylinder 142 on the rear-wheel side at a predetermined master-cylinder pressure PM = KP or more, and pressure-reducing control is performed. When this time is taken to be time t1 in FIG. 22, a state wherein antiskid control has not been executed at the front-right wheel FR in the proximity of time t1 is envisaged.

When pressure-reducing control of the wheel cylinder 142 is conducted from time t1 and wheel acceleration dVW of this wheel have become a positive value at time t2, pressure-reducing control is terminated at time t2 and pulse pressure-increase is performed. Further, when antiskid control has not been performed on the wheel cylinder 141 side in the interval of from time t1 to t2, brake fluid of the wheel cylinder 42 is taken in the reservoir 148 and discharged toward the wheel cylinder 141 by the pump 149. At this time, the brake-fluid quantity taken out of the wheel cylinder 142 is added at the wheel cylinder 141 originally provided with the master-cylinder pressure PM. Therefore, a second brake-fluid pressure higher than the master-cylinder pressure PM is formed. This second brake-fluid pressure is maintained due to the operation of the proportioning control valve 156 when the master-cylinder pressure PM is the split-point pressure P or more. As a result, the pressure of the wheel cylinder 141 becomes higher than the master-cylinder pressure PM.

Additionally, after the wheel cylinder 142 of the wheel which is the target of antiskid control has been pulse pressure-increased in the interval of from time t2 to t3, pressure-reducing control is again performed at the time t3 when the slippage state thereof has become a predetermined value or more. The brake fluid quantity taken out of the wheel cylinder 142 at this time also is discharged toward the wheel cylinder 41 on the front-wheel side whereat antiskid control has not been conducted. As a result, the second brake-fluid pressure on the wheel cylinder 141 side becomes still higher. Further, even when pulse pressure-increasing is performed utilizing the master-cylinder pressure PM for the wheel cylinder 142 in the interval of from time t2 until t3, because the proportioning control valve 156 is disposed at a location whereat the pressure-maintaining action of the proportioning control valve 156 acts upon solely the wheel cylinder 141 on the front-wheel side, the second brake-fluid pressure is maintained without change.

Because wheel-cylinder pressure PW of the front-wheel side is gradually increased in this way according to the pressure-reducing control of the rear-wheel side, the wheel braking force of the front-wheel side can be increased and braking distance can be shortened even when there is no further depression of the brake pedal 143 by the driver.

Additionally, when the wheel cylinder of the front-wheel side is caused to be higher than the master-cylinder pressure PM utilizing the brake fluid pressure-reduced from the wheel cylinder on the rear-wheel side, the possibility becomes greater of being able to cause the front wheel as well to enter antiskid control. Furthermore, when the wheel on the rear-wheel side has entered antiskid control, this rear wheel substantially comes to exhibit maximum wheel-braking force.

At this time, when the wheel on the front-wheel side as well can be caused to enter antiskid control due to the pressure-reduced brake-fluid quantity, maximum wheel braking force can be demonstrated on the front-wheel side as well. Therefore, the balance of wheel braking force of the front and rear wheels can be improved. Thus, side force and road-surface reaction force in the vehicle-body longitudinal direction at the front and rear wheels can be caused to be within a certain range so that understeer and oversteer can be prevented, and vehicle-body behavior can be caused to be stabilized.

Further, when wheel braking-force distribution has been established as shown by the dotted line in FIG. 23, the braking-force distribution of the front and rear wheels can be superposed to a maximal extent on the theoretical braking-force distribution line when the wheel-cylinder pressure PW on the rear-wheel side in the region $\alpha$ is pressure-reduced by antiskid control. Consequently, shortening of braking distance and improvement of stability of vehicle-body behavior is achieved as well.

Additionally, the proportioning control valve 156 described earlier is employed when maintaining the second wheel-cylinder pressure. However, because this proportioning control valve 156 mechanically enables flow of brake fluid from the wheel-cylinder side to the master-cylinder side at any time according to the master-cylinder pressure PM, an effect is provided wherein wheel-cylinder pressure control in accordance with the operating intention of the driver represented in the state of fluctuation of the master-cylinder pressure PM can be realized without imparting an excessive control load. That is to say, when the brake pedal 143 operated by the driver is returned, the several wheel-cylinder pressures are mechanically reduced in response to this operation.

(Eighth Embodiment)

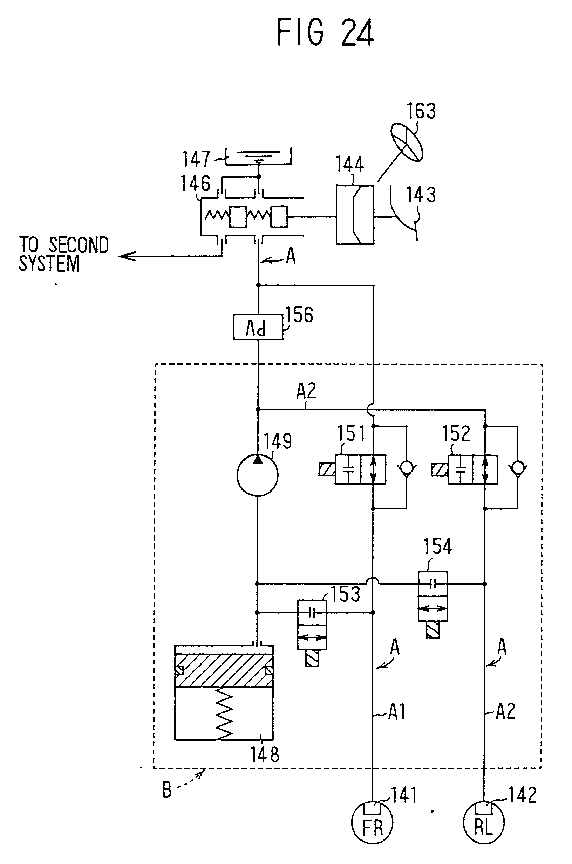

A eighth embodiment will be described next with reference to FIG. 24.

The brake system in this FIG. 24 is made up of diagonal piping, similarly to the seventh embodiment. Further, similar symbols will be applied to items having a mode of operation and effects similar to the several structures in the brake system shown in FIG. 18, and description of same will be omitted. Additionally, because a device substantially similar to the device indicated in the above-described FIG. 20 and FIG. 21 can be employed in the structure and control flow of the ECU and so on according to the present embodiment, description of same will be omitted.

With the brake system shown in this FIG. 24, a first conduit A1 extending from between a master cylinder 146 and a proportioning control valve 156 connected in reverse is connected to a wheel cylinder 141 of a front-right wheel FR. Additionally, a second conduit A2 extending from between the proportioning control valve 156 and a discharge port of a pump 149 is connected to a wheel cylinder 142 of a rear-left wheel RL.

In this way, the present embodiment is structured so that the maintaining action by the proportioning control valve 156 acts upon the rear wheel oppositely to the brake system shown in FIG. 18 according to the foregoing seventh embodiment. That is to say, the wheel cylinder 141 of the front-right wheel FR receives solely master-cylinder pressure, and the wheel cylinder 142 of the rear-left wheel RL receives, in addition to master-cylinder pressure, brake-fluid pressure due to the brake-fluid quantity supplied during intake and discharge by the pump 149 of the brake fluid taken out of the wheel cylinder 41 to reduce the wheel-cylinder pressure thereof. In this way, the proportioning control valve 156 is disposed so as to have a maintaining action to maintain brake-fluid pressure applied to the wheel cylinder 142 of the rear-wheel side at a second brake-fluid pressure higher than a master-cylinder pressure PM.

With structure such as this, front and rear braking-force distribution is established so that the front wheels priorly lock during vehicle braking. That is to say, the braking-force distribution is established as indicated by the single-dotted broken line in FIG. 23. When antiskid control is initiated and pressure-reducing control is performed for the front-right wheel FR, this pressure-reduced brake fluid comes to be applied to the rear-wheel side, and the brake-fluid pressure of the wheel cylinder 142 becomes the second brake-fluid pressure higher than the master-cylinder pressure PM.

That is to say, a region $\beta$ in FIG. 23 is a region where wheel braking force on the rear-wheel side is insufficient compared with the theoretical braking-force distribution, but the rear-wheel insufficient portion of wheel braking force in this region $\beta$ can be supplemented by the brake-fluid quantity pressure-reduced from the front-wheel cylinder 141 and so the front and rear braking-force distribution can be made to approach the theoretical braking force distribution.

(Nineth Embodiment)

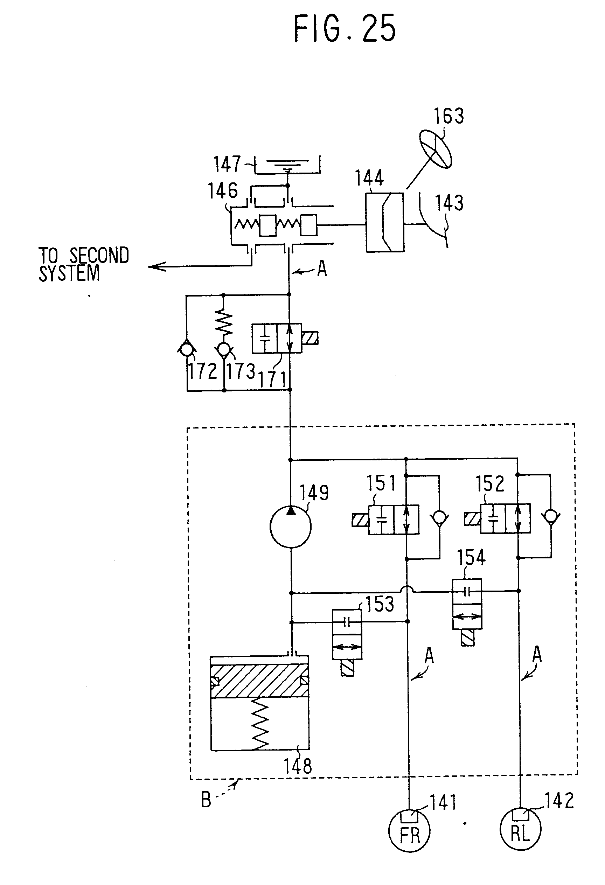

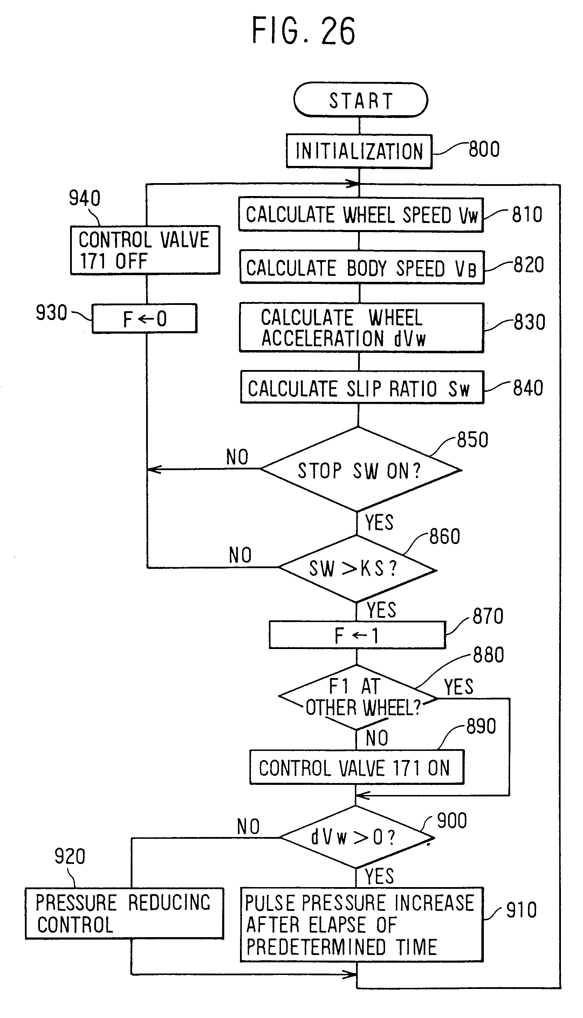

A Nineth embodiment will be described next with reference to FIG. 25 and FIG. 26. Note that, similar symbols will be applied to items having a mode of operation and effects similar to the several structures in the brake system shown in the foregoing FIG. 18, and description of same will be omitted.

According to the present embodiment, a control valve 171 provided with two positions of communicated and interrupted is employed in substitution for a proportioning control valve as a device to maintain a differential pressure on a master cylinder 146 side and a wheel cylinder 141 and 142 side when wheel-cylinder pressure PW has become a second brake-fluid pressure higher than master-cylinder pressure PM.

In a state of ordinary braking, the valve position of this control valve 171 is at the communicated position, which is the illustrated position. Accordingly, a pump discharge destination is connected to brake piping more to the wheel cylinder 141 and 142 side than this control valve 171. Further, ends of conduits branching to the wheel cylinder 141 side and the wheel cylinder 142 side is connected between a discharge port of the pump 149 and the control valve 171 in a first piping system A.

Additionally, a check valve 172 is provided in parallel to the control valve 171. This check valve 172 is connected in a direction permitting solely flow of brake fluid from the master cylinder 146 side to the side of the respective wheel cylinders 141 and 142.

Moreover, a differential-pressure valve 173 is provided in parallel to the control valve 171. This differential-pressure valve 173 permits flow of brake fluid from the wheel cylinder 141 and 142 side to the master cylinder 146 side solely when brake-fluid pressure of the wheel-cylinder side has been higher by a predetermined pressure (for example 50 kgf/cm$^2$) than the master-cylinder pressure PM.

The foregoing check valve 172 compensates at least ordinary braking when a problem such as untoward interruption, clogging, or the like of the control valve 171 has occurred. Additionally, in a case where brake-fluid pressure in a conduit on the wheel cylinder 141 and 142 side has exceeded a permitted pressure, the differential-pressure valve 173 allows brake fluid to escape to the master cylinder 146 side to protect the conduit. Further, it is possible also to eliminate this check valve 172 and this differential-pressure valve 173 according to the performance of the control valve 171, conduit durability (pressure resistant), and so on.

One example of the flow of control for a system structured in this way will be described next with reference to the flowchart of FIG. 26.

As shown in FIG. 26, when the flow of control is started, processing similar to that described in detail in FIG. 21 is performed from step 800 to step 860. Accordingly, when it has been determined in step 850 that the stop switch 161 is not in an "on" state, or when a negative determination that the slip ratio SW is not excessive has been made in step 860, execution advances to step 930 and 0 is set to a flag F to indicate that antiskid control is not in progress.

Thereafter, in step 940 a signal is output to switch off the control valve 171. That is to say, the control valve 171 is maintained in a communicated position. Accordingly, execution returns to step 810 and the flow of control is repeated.

Meanwhile, in a case where an affirmative determination has been made in step 860, because a state of excessive slippage is considered to occur, in step 870 the flag F is set to 1 to indicate that antiskid control is being performed for the wheel which is the present control target.

Next, in step 880, it is determined whether the flag F is set to 1 for the wheel in the same piping system which is not the present control target. For example, when the wheel which is the present control target is the front-right wheel FR, it is determined whether antiskid control is in progress for the rear-left wheel RL. Accordingly, execution advances to step 900 when an affirmative determination has been made in step 880; conversely, execution advances to 890 when a negative determination has been made.

In step 890, the control valve 171 is switched on and the valve position thereof is caused to assume an interrupted position, and execution advances to step 900.

In step 900, it is determined whether the wheel acceleration dVW of the wheel which is the control target has become a positive value. Herein, execution advances to step 910 when an affirmative determination has been made; conversely, execution advances to 920 when a negative determination has been made.

In step 920, pressure-reducing control is executed for the wheel which is the control target.

Meanwhile, in step 910, pulse pressure-increasing control is performed for the wheel which is the control target for a predetermined time interval or for a predetermined number of pulses, and execution returns to the above-described step 910.

Further, maintenance control wherein the pressure-increasing control valve and the pressure-reducing control valve are both caused to assume an interrupted position may be executed for a predetermined time interval priorly to pressure-increasing of the wheel-cylinder pressure by pulse pressure increase control. Additionally, an interval of pulse signal or the like in the initial output of pulse pressure-increase control can be controlled to obtain results similar to the above-described maintenance control. Here, because a time differential is produced between pressure-reduction of the wheel-cylinder pressure PW of the wheel which is the control target and pressure-increase of the wheel cylinder pressure of the other wheel (non-control target wheel) due to pump discharge, there exists a possibility that the entirety of the pressure-reduced brake fluid cannot be discharged toward the wheel cylinder of the other wheel solely while the wheel-cylinder pressure of the wheel which is the control target is subject to pressure-reducing control. However, when wheel-cylinder pressure of the control-target wheel is maintained after pressure-reducing control because pressure-increasing control valve corresponding to the control-target wheel is in an interrupted state even during this maintaining, brake fluid due to pump intake and discharge is sufficiently applied to the wheel cylinder on the side of the wheel which is not the control target.

A mode of operation and effects similar to the foregoing seventh and eighth embodiments can be obtained when controlled in this way as well. Further, in a case of this embodiment, the front- and rear-wheel braking-force distribution may be established at either the dotted line or the single-dotted broken line in FIG. 23.

With the present embodiment, when antiskid control is not performed for the wheel within the same piping system which is not the present control target, a margin exists in the wheel braking force that this wheel can exhibit. Therefore, wheel-cylinder pressure is increased higher than the master-cylinder pressure PM due to the brake-fluid pressure-reduced by antiskid control.

Additionally, the control valve 171 is caused to assume an interrupted position solely in a case where antiskid control is not performed for the wheel within the same piping system which is not the present control target, so that brake-fluid pressure on the wheel-cylinder side can be maintained.

Furthermore, because the control valve 171 remains unchanged in an "off" state when both wheels in the same piping system have entered antiskid control, performance of antiskid control can be enhanced. When the pressure of brake fluid to increase the wheel-cylinder pressure in pressure-increasing control (pulse pressure increase) during antiskid control is high on a low-$\mu$ road such as an iced road or the like, there may be immediate deterioration to a tendency to lock and time period requiring pressure-reducing control becomes longer, depending on a method for pressure-increasing control. As a result, a problem wherein braking distance becomes longer at this time is considered. However, according to the present embodiment, the control valve 171 which is disposed between the master-cylinder side and the wheel-cylinder side is caused to assume a communicated state when both wheels have entered antiskid control. Therefore, a problem such as this does not occur.

(Tenth Embodiment)

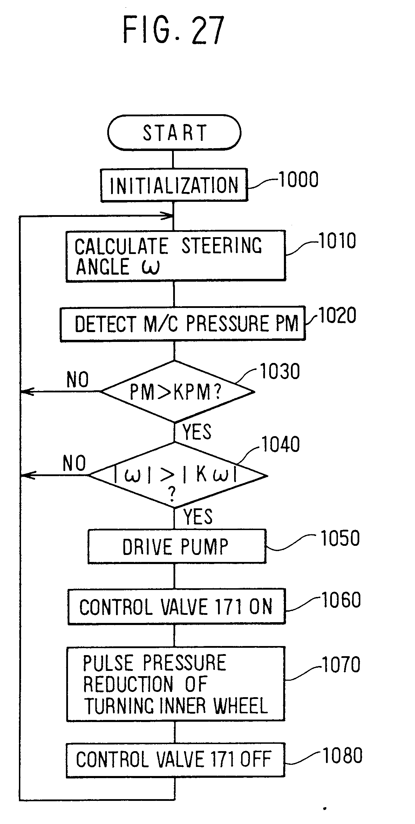

A tenth embodiment will be described next with reference to FIG. 27 through FIG. 30. The structure described in detail in the foregoing FIG. 25 and FIG. 20 can be employed as one example of a brake system and electrical structure thereof to realize flow of control according to the present embodiment.

As shown in FIG. 27, when the flow of control is started, initialization setting is performed in step 1000.

In step 1010, steering angle $\omega$ is calculated on a basis of output signals from a steering sensor 163. This steering angle $\omega$ is utilized as corresponding to the turning angle of the wheel.

Next, in step 1020, master-cylinder pressure PM is detected. This master-cylinder pressure PM may be detected from a master-cylinder pressure sensor or the like not illustrated. Further, a pedal-stroke amount, pedal depression-force value, or the like may be detected by a predetermined sensor as a parameter equivalent to the master-cylinder pressure PM and substituted therefor.

Next, in step 1030, it is determined whether the master-cylinder pressure PM is higher than a predetermined pressure KPM. Herein, execution returns to step 1010 when a negative determination has been made; conversely, when an affirmative determination has been made, a vehicle-braking state due to pedal depression by the driver is determined to be obtained and execution advances to step 1040.

In step 1040, it is determined whether the absolute value of the steering angle $\omega$ is larger than a predetermined angle K$\omega$. Further, the direction of vehicle turning is determined according to the positive or negative sign of the steering angle $\omega$. Execution returns to step 1040 when a negative determination has been made in this step 1040; conversely, when an affirmative determination has been made, a turning angle of a predetermined value or more is determined to be obtained and execution advances to step 1050.

In step 1050, drive of a pump 149 is initiated in response to occurrence of the braking and turning state of the vehicle. As one example of this braking and turning state of the vehicle, a sharp turning and braking state such that freedom of vehicle-body behavior is not obtained and vehicle-body behavior becomes unstable even with manipulation of brake pedal by the driver may be given. This driving of the pump 149 may be released when a negative determination is made in step 1030 or 1040, or in a state (for example a stopped state) wherein vehicle-body speed VB has become a predetermined speed or less.

In step 1060, a control valve 171 is switched on and caused to assume an interrupted position, and flow of brake fluid on a master cylinder 146 side and the sides of respective wheel cylinders 141 and 142 is prohibited.

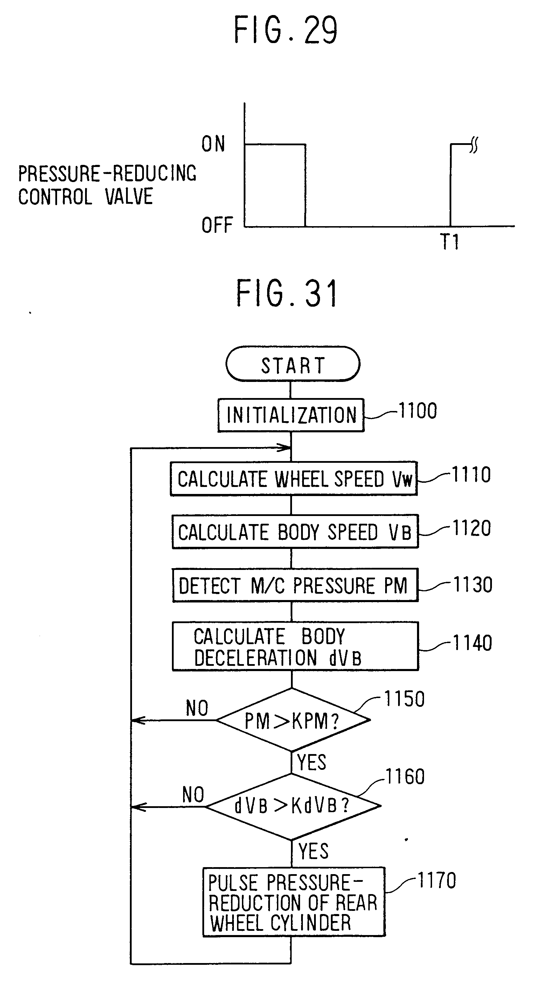

In step 1070, pulse pressure reduction control is performed at the wheel-cylinder pressure of the rear wheel on the inner-wheel side of the turning direction determined according to the positive or negative sign of the steering angle $\omega$. This pulse pressure reduction control may be performed on a basis of the relational map of steering angle $\omega$ and pressure-reduction pulse ratio shown in FIG. 28. Namely, when the steering angle $\omega$ is larger than the predetermined angle K$\omega$, the pressure-reduction pulse ratio is caused to become larger as this steering angle $\omega$ becomes larger. Further, the pressure-reduction pulse ratio may be controlled in consideration of to vehicle-body speed VB and vehicle-body deceleration dVB in addition to the steering angle $\omega$. For example, the pressure-reduction pulse ratio may be caused to become larger as the vehicle-body deceleration dVB or the vehicle-body speed VB becomes larger.

Note that the pressure-reduction pulse ratio is a ratio of an "on" (communicated-position) state of a pressure-reducing valve to an "off" (interrupted-position) state of same per unit time T1, as shown in FIG. 29, and the pressure-reduction pulse is made off during the unit time T1 when the pressure-reduction pulse ratio = 0% and on during the unit time T1 when the pressure-reduction pulse ratio = 100%.

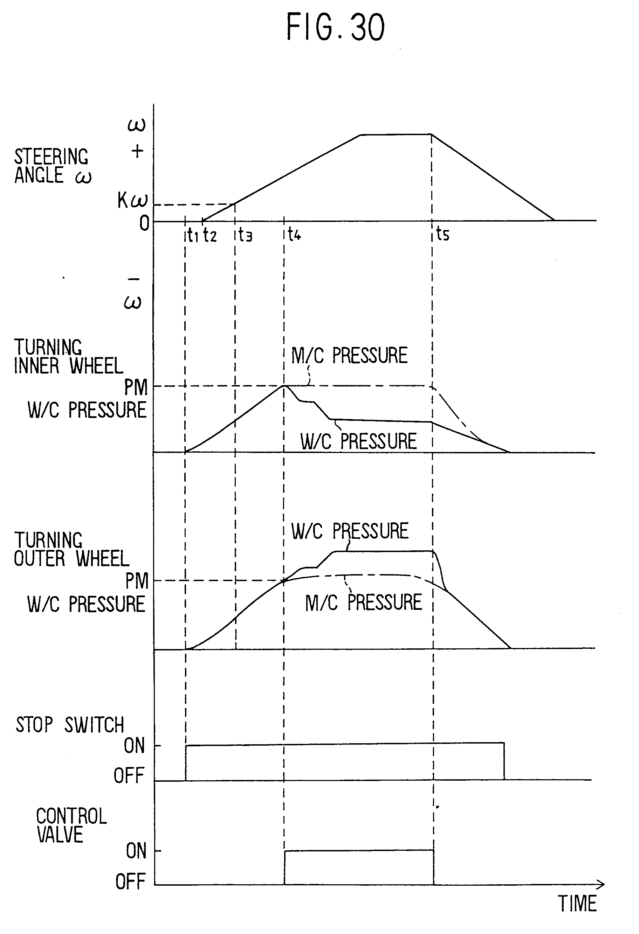

Next, temporal change in the several wheel-cylinder pressures when controlled in this way will be described with reference to FIG. 30.

As shown in FIG. 30, at time t1 a brake pedal 143 is depressed and the master-cylinder pressure PM begins to be applied to the respective wheel cylinders 141 and 142. At time t2 a steering wheel 163 starts to be turned, and at time t3 the steering angle $\omega$ becomes larger than the predetermined angle K$\omega$. Accordingly, when the master-cylinder pressure PM has become larger than the predetermined pressure KPM at time t4, the control valve 171 is switched on and caused to assume an interrupted state. Concurrently with this, the wheel-cylinder pressure on the turning inner-wheel side undergoes pressure-reducing control, and brake fluid taken out of the wheel cylinder thereof is applied to the wheel cylinder on the turning outer-wheel side. Thus, the brake-fluid pressure on this turning outer-wheel side becomes a second brake-fluid pressure which is higher than the master-cylinder pressure PM indicated by the single-dotted line in FIG. 30. Meanwhile, the brake-fluid pressure on the turning inner-wheel side becomes a brake-fluid pressure which is lower than the master-cylinder pressure indicated by the single-dotted line in FIG. 30.

As a result, wheel braking force which accords with the turning and braking state can be demonstrated at the several wheels. That is to say, the overall balance of the longitudinal road-surface reaction force and side force exhibited by the several wheels can be improved by decreasing the wheel-cylinder pressure for the turning inner wheel and increasing the wheel-cylinder pressure for the turning outer wheel with the master-cylinder pressure PM taken as a reference so that the brake-fluid pressure applied to the turning inner-wheel side wherein ground-contacting load has been reduced by load movement is reduced and moreover the turning outer-wheel side whereat ground-contacting load has been increased becomes higher than the master-cylinder pressure.

Additionally, feed-forward control can be realized priorly to pressure reduction due to antiskid control and execution of antiskid control can be caused to be delayed for the rear wheel on the turning inner side which is most susceptible to entering antiskid control.

(eleventh Embodiment)

A eleventh embodiment will be described next with reference to FIG. 31 and FIG. 32. The structure described in detail in the foregoing FIG. 25 and FIG. 20 can be employed as one example of a brake system and electrical structure thereof to realize flow of control according to this eleventh embodiment as well.

As shown in FIG. 31, when the flow of control is started, initialization setting is performed in step 1100.

Next, in step 1110, wheel speed VW is detected.

Next, in step 1120, vehicle-body speed VB is detected.

Next, in step 1130, master-cylinder pressure PM based on output of a master-cylinder pressure sensor not illustrated is detected.

Next, in step 1140, vehicle-body deceleration dVB is computed on a basis of temporal change in vehicle-body speed VB, output from a vehicle-body longitudinal-acceleration sensor not illustrated, or the like.

Next, in step 1150, it is determined whether the master-cylinder pressure PM is higher than a predetermined pressure KPM. Herein, execution returns to step 1110 in a case where a negative determination has been made; conversely, in a case where an affirmative determination has been made, execution advances to step 1160.

In step 1160, it is determined whether vehicle-body deceleration dVB is larger than a predetermined vehicle-body deceleration KdVB (for example 0.3 G). This predetermined vehicle-body deceleration KdVB may be established in light of a state wherein a large vehicle-braking state of a certain extent is required by the driver or a state wherein load movement in the longitudinal direction of the vehicle body occurs to a certain large extent. Execution returns to step 1110 in a case where a negative determination has been made in this step 1160; conversely, in a case where an affirmative determination has been made, execution advances to step 1170.

In step 1170, wheel-cylinder pressure on the rear-wheel side is pulse pressure-reduced for a predetermined time. This pulse pressure-reduction ratio may be established so as to become larger as vehicle-body deceleration dVB, for example as shown in FIG. 32.

Additionally, execution of pump drive is started simultaneously with the start of pulse pressure reduction control. This driving of the pump may be released when a negative determination is made in step 1150 or 1160, or in a state (for example a stopped state) wherein vehicle-body speed VB has become a predetermined speed or less.

In a case where control such as this has been executed, feed-forward control to increase brake-fluid pressure on the front-wheel side to the second brake-fluid pressure is realized utilizing a brake-fluid which is taken out of the wheel cylinder of the rear wheel at which ground-contacting load has been lowered due to load movement in the longitudinal direction of the vehicle.

Additionally, the present invention is not exclusively limited to the above-described embodiments, but can of course be embodied in various modes within the scope of the present invention.

For example, wheel-slippage quantity Xs was utilized in the foregoing fifth embodiment and wheel-slippage integrated value AXs was utilized in the foregoing sixth embodiment as the determination criterion for performing pumping control. However, other than these, means which will be described hereinafter can be employed.

A slip ratio of the several wheels can be employed as the determination criterion.

Wheel-cylinder pressure of the several wheels can be employed as the determination criterion. In this case, the wheels are regarded as having approached the road-surface limit in a case where W/C pressure detected by a W/C sensor has become a reference value or more, and regulating control is performed.

Vehicle-body deceleration can be employed as the determination criterion. For example, in a case such as where vehicle-body deceleration is 0.5 G or more, namely, a case wherein high braking force is being applied, if regulating control (for example communicating control to cause a first pressure-reducing control valve 15 to assume a communicated state) is executed, pseudo-pumping of brake fluid pressure is effected, and deterioration of the target wheel to a locked state can be delayed.

Additionally, control may be performed utilizing the control valve 171 in the ninth embodiment in substitution for the proportioning control valve 156 in the above-described seventh and eighth embodiments. Conversely, the proportioning control valve 156 in the above-described seventh and eighth embodiments may be utilized in substitution for the control valve 171 in the ninth embodiment.

Further, when employing the control valve 171, wheel-cylinder pressure control which accords with an intention to reduce pressure by the driver may be realized by releasing the "on" state of the control valve 171 according to a reduction change in the master-cylinder pressure PM or the pedal stroke.

Moreover, detection of the turning state in the tenth embodiment may be performed according to output from a lateral acceleration sensor in substitution for the steering sensor.

In addition, the seventh through ninth embodiments may be combined as desired with the tenth and eleventh embodiments to perform control.

An example employing diagonal piping was described in the foregoing several embodiments, but piping of various types can be applied as long as it can move brake fluid from one wheel side to another wheel side, such as for example front and rear piping or the like. For example, the tenth embodiment may be applied in a vehicle of front and rear piping having respective piping systems of a front-right wheel FR - front-left wheel FL and a rear-right wheel RR - rear-left wheel RL.

With the embodiments described heretofore, the present invention was applied in a system to generate master-cylinder pressure PM directly via a vacuum booster by a driver's brake pedal operation, but application for example in a so-termed brake-by-wire system to convert brake-pedal operation by a driver to an electrical signal and generate brake-fluid pressure as a master-cylinder pressure PM in a brake-fluid pressure-generating source according to this electrical signal is also acceptable.

Additionally, application in an automatic brake to perform hazard-avoidance or the like is also acceptable. During this automatic braking, master-cylinder pressure may be generated by controlling a vacuum booster.

(Twelfth Embodiment)

The present embodiment is an example wherein a brake apparatus for a vehicle according to the present invention is applied in a vehicle of diagonal piping provided with respective piping systems of front-right wheel - rear-left wheel and front-left wheel - rear-right wheel in a front-wheel drive, four-wheeled car.

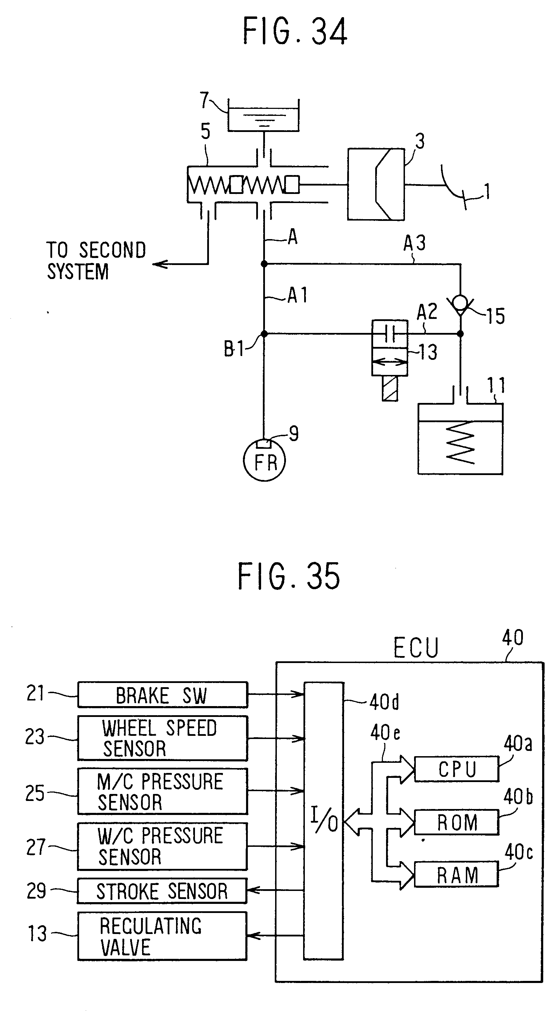

Firstly, basic structure of the brake apparatus will be described with reference to the brake-piping model shown in FIG. 34. Further, to simplify description, one wheel of a particular piping system (for example the front-right wheel) will be taken as an example and described in description hereinafter.

In FIG. 34, a brake pedal 1 depressed by a driver when applying braking force to the vehicle is connected to a booster 3, and depression force applied to the brake pedal 1 and pedal stroke are conveyed to this booster 3.

A master cylinder (M/C) 5 is a device to apply brake-fluid pressure boosted by the booster 3 to the entirety of the brake piping, and a master reservoir 7 to accumulate brake fluid is disposed in this M/C 5.

Master-cylinder pressure (M/C pressure) generated by the foregoing M/C 5 is conveyed to brake fluid within a piping system A, namely, a first piping system A linking the M/C 5, a wheel cylinder (W/C) 9 disposed in the front-right wheel FR to impart braking force to this wheel, and another W/C (not illustrated) disposed in the rear-left wheel to impart braking force to this wheel. M/C pressure is similarly conveyed also to a second piping system linking respective W/Cs disposed in the front-left wheel and the rear-right wheel to the M/C 5, but because structure similar to the first piping system A can be employed, detailed description will be omitted.

The structure of the brake piping of the front-right wheel FR side of the above-mentioned first piping system A is provided with a conduit A1 communicating the M/C 5 and the W/C 9, a conduit A2 branching from the conduit A1 at a branching point B1 and extending to a reservoir 11, in which a solenoid valve (regulating valve) 13 to control a communicated or interrupted state of the conduit A2 is disposed, a conduit A3 extending from the reservoir 11 to the conduit A1 and bypassing the regulating valve 13, in which a check valve 15 disposed. Further, brake piping of the rear-right wheel in the first piping system A is similar to the above-described front-right wheel FR, and so description thereof will be omitted.

In particular, according to the present embodiment, as will be described later, control to cause braking force to be further increased as a result by reducing M/C pressure and W/C pressure (hereinafter termed pressure-reducing control) is performed, and in a case thereof, control to actuate the regulating valve 13 and cause the conduit A2 to be communicated state is performed.

Electrical structure of the present embodiment will be described next.

The above-described pressure-reducing control is performed by an electronic control unit (ECU) 40 shown in FIG. 35.

This ECU 40 is structured by a microprocessor provided with a CPU 40a, a ROM 40b, a RAM 40c, an input/output portion 40d, a bus line 40e, and the like of known art.

A brake switch 21 to detect when the brake pedal 1 has been depressed, wheel-speed sensors 23 to detect wheel speed of each of the several wheels, an M/C-pressure sensor 25 to detect M/C pressure, W/C-pressure sensors 27 to detect W/C pressure of each of the several wheels, and a stroke sensor 29 to detect an operated quantity of the brake pedal 1 are connected to the input/output portion 40d. Additionally, the regulating valve 13 is connected to the input/output portion 40d.

Furthers the above-mentioned operated quantity of the brake pedal 1 is "0" prior to being depressed but increases in accordance with a depressed quantity, and so the position of the brake pedal 1 can be determined from the operated quantity thereof.

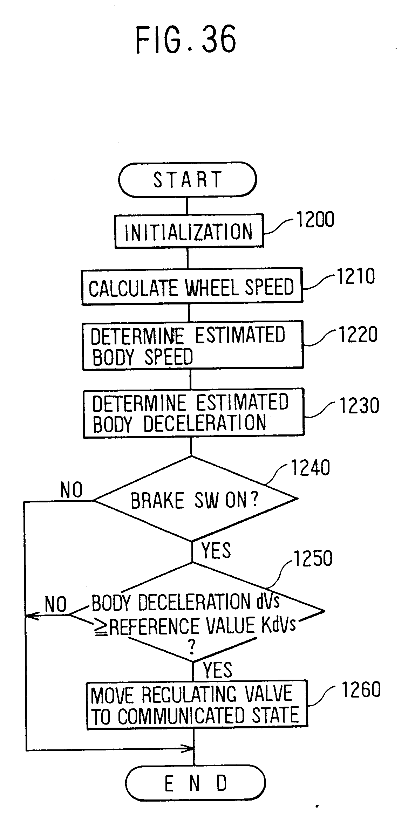

Pressure-reducing control performed by this ECU 40 will be described next with reference to FIG. 36. Herein, an example wherein estimated vehicle-body deceleration is utilized as a determination criterion for initiating pressure-reducing control will be described.

In step 1200 in FIG. 36, processing for initialization setting of known art, such as clearing flags, is performed.

Next, in step 1210, wheel speed Vw of each of the several wheels is calculated on a basis of signals from the wheel-speed sensors 23 of the respective wheels.

Next, in step 1220, estimated body speed Vs is determined on a basis of for example the largest among the several wheel speeds Vw under a condition that the change thereof is limited within a predetermined range.

Next, in step 1230, estimated vehicle-body deceleration (vehicle-body deceleration G) dVs is determined from the difference between the previous estimated body speed Vs and the present estimated body speed Vs.

Next, in step 1240, it is determined whether the brake switch 21 has been switched on, that is to say, whether the brake pedal 1 has been depressed. Execution advances to step 1250 when an affirmative determination is made herein; conversely, this processing is terminated for the time being when a negative determination is made.

In step 1250, it is determined whether a state of large pedal reaction force occurs by determining whether vehicle-body deceleration GdVs is a reference value KdVs or more. Execution advances to step 1260 when an affirmative determination is made herein; conversely, this processing is terminated for the time being when a negative determination is made.

In step 1260, the regulating valve 13 is actuated to communicate the conduit A2, and this processing is terminated for the time being, because the condition of large pedal reaction force for initiating pressure-reducing control was fulfilled. Due to this, brake fluid within the conduit A1 and in turn the M/C 5 and W/C 9 is allowed to escape to the reservoir 11, thereby reducing the M/C pressure and W/C pressure. Further, the interval during which the regulating valve 13 is in a communicated state is taken to be a predetermined fixed time interval T1.

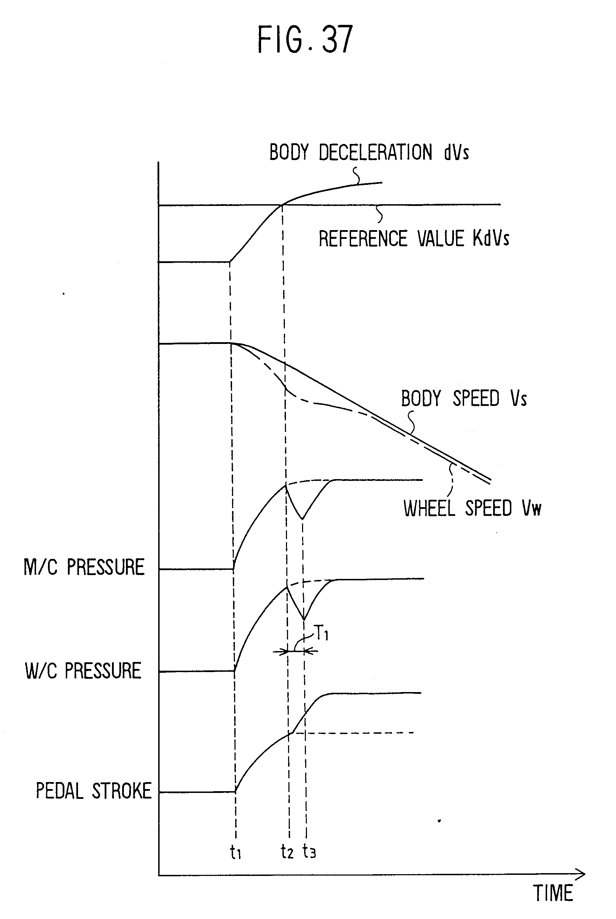

Action of fluctuation in brake-fluid pressure and the like due to the above-described pressure-reducing control will be described next with reference to FIG. 37.

As shown in FIG. 37, when the brake pedal 1 is depressed with a certain timing (time t1), the brake is applied to the wheel. As a result, wheel speed Vw gradually declines, and along with this, vehicle-body Vs speed declines, and in accompaniment thereto, vehicle-body deceleration GdVs becomes large (i.e., the extent of deceleration increases).

Accordingly, when the vehicle-body deceleration GdVs surpasses the reference value KdVs (time t2), the regulating valve 13 is actuated and assumes a communicated state, and so brake fluid within the conduit A1 flows out to the reservoir 11, whereby not solely M/C pressure but also W/C pressure decline. Because the brake pedal 1 is pulled due to this drop in M/C pressure, the brake pedal 1 is depressed by an amount corresponding thereto, and pedal stroke is increased.

When the predetermined time interval T1 of this communicated state of the regulating valve 13 has terminated (time t3), the regulating valve 13 is deactuated, and so the conduit A2 is interrupted. At this time, depression action of the brake pedal 1 accompanying pressure-reducing control has already been performed, and so M/C pressure and W/C pressure gradually recover due to this depression action.

In this way, with the present embodiment, the vehicle-body deceleration GdVs is determined, and in a case where this vehicle-body deceleration GdVs has become the reference value KdVs or more (a case where pedal reaction force is large), the regulating valve 13 is caused to assume a communicated state so that brake fluid is allowed to escape from the conduit A1 communicating the M/C 5 and the W/C 9 to the reservoir 11. Because the brake pedal 1 is pulled due to this, further depression of the brake pedal 1 is facilitated with no pressing back of the brake pedal 1 due to brake reaction force, whereby high W/C pressure can be sustained. As a result thereof, high vehicle-body deceleration G can be sustained, and so an effect is demonstrated wherein braking performance is enhanced.

In particular, because pulling action of the brake pedal 1 occurs due to causing the regulating valve 13 to assume a communicated state, the driver can recognize the present braking state (information on for example the possibility of further depression, and so on) from this movement of the brake pedal 1, and accordingly, there exists an advantage in that the operating range of the driver is expanded and drive feeling is improved.

Additionally, because W/C pressure as well can be reduced concurrently with M/C pressure, a pseudo-pumping brake can be realized. When each regulating valve 13 for the several wheels is controlled to a communicated state at this time, a pumping brake can be achieved at each of the respective wheels.

Moreover, when a communicated state is formed concurrently at all wheels in correspondence to vehicle-body deceleration G, change occurs also in vehicle-body behavior due to this control, and the driver can be informed that this control has been executed not solely from the brake pedal 1, but from the vehicle-body behavior as well. Therefore, vehicle-body braking feeling can be improved, and together with this, the driver can physically sense the controlled state with the entire vehicle body.

Further, with the present embodiment, vehicle-body deceleration G was determined from wheel speed Vw, but vehicle-body deceleration G may be directly determined by for example an output of a G sensor.

(thirteenth Embodiment)

A thirteenth embodiment will be described next.

The present embodiment differs greatly from the above-described twelfth embodiment with respect to the point of being provided with a pump. Further, description of portions similar to the foregoing twelfth embodiment will be omitted or simplified, and identical symbols will be used for like items in the physical structure.

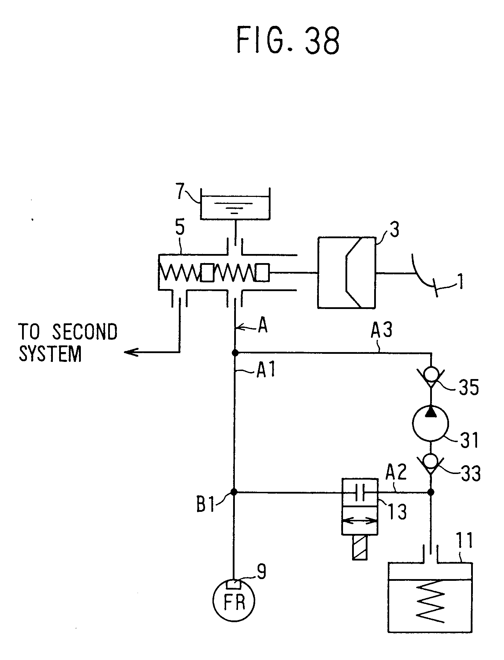

As shown in FIG. 38, a first piping system A of brake piping according to the present embodiment is, similarly to the foregoing first embodiment, provided on a front-right wheel FR side with conduits A1, A2, and A3, a regulating valve 13, and a reservoir 11.

With the present embodiment in particular, a pump 31 to pump up brake fluid from the reservoir 11 and supply same to the conduit A1 side is disposed in the conduit A3.

This pump 15 is utilized to be driven for example concurrently with termination of the interval T1 of pressure-reducing control which is control for increasing pressure of the brake-fluid pressure (hereinafter termed pressure-increasing control) of the conduit A1 in accordance with the pressure-reducing control described in the foregoing twelfth embodiment. Further, the pump 15 is stopped after elapse of a predetermined time interval.

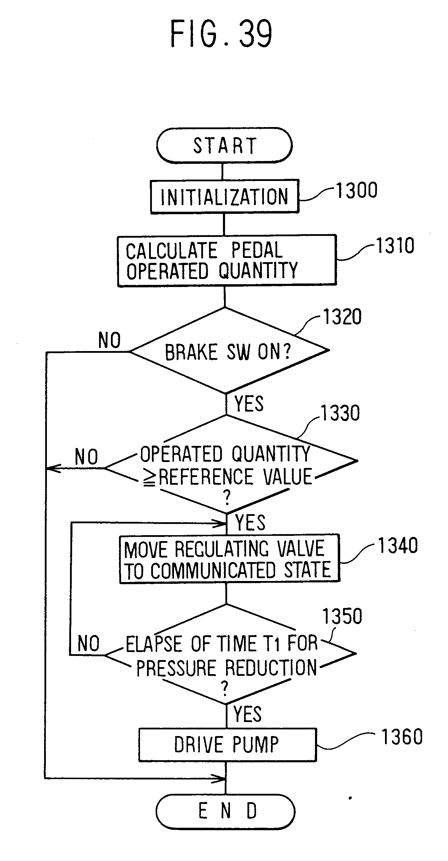

Next, pumping control of the present embodiment will be described with reference to the flowchart of FIG. 39. Herein, an example utilizing an operated quantity of the brake pedal 1 as a determination criterion for pressure-reducing control will be described.

In step 1300 in FIG. 39, processing for initialization setting of known art is performed.

Next, in step 1310, the operated quantity of the brake pedal 1 is calculated on a basis of a signal from a stroke sensor 29.

In step 1320, it is determined whether the brake switch 21 has been actuated, and execution advances to step 1330 when an affirmative determination is made herein; conversely, this processing is terminated for the time being when a negative determination is made.

In step 1330, it is determined whether pedal reaction force is large by determining whether the operated quantity of the brake pedal 1 is a reference value or more. Execution advances to step 1340 when an affirmative determination is made herein; conversely, this processing is terminated for the time being when a negative determination is made.

In step 1340, the regulating valve 13 is actuated, the conduit A2 is communicated, and brake fluid within the conduit A1 and in turn the M/C 5 and W/C 9 is allowed to escape to the reservoir 11, because the state of pedal reaction force was determined to be large. Due to this, the brake-fluid pressure of the M/C 5 is reduced, and so the brake pedal 1 is pulled and the brake pedal 1 comes to be further depressed.

Next, in step 1350, it is determined whether a time interval T1 of pressure-reducing control has elapsed. Execution advances to step 1360 when an affirmative determination is made herein; conversely, pressure-reducing control is continued when a negative determination is made.

In step 1360, pressure-reducing control has terminated, and so the pump 31 is driven so that brake fluid is supplied from the reservoir 11 to the first conduit A1. As a result, brake-fluid pressure within the first conduit A1 and in turn the M/C 5 and W/C 9 are increased. Thereafter, this processing is terminated for the time being.

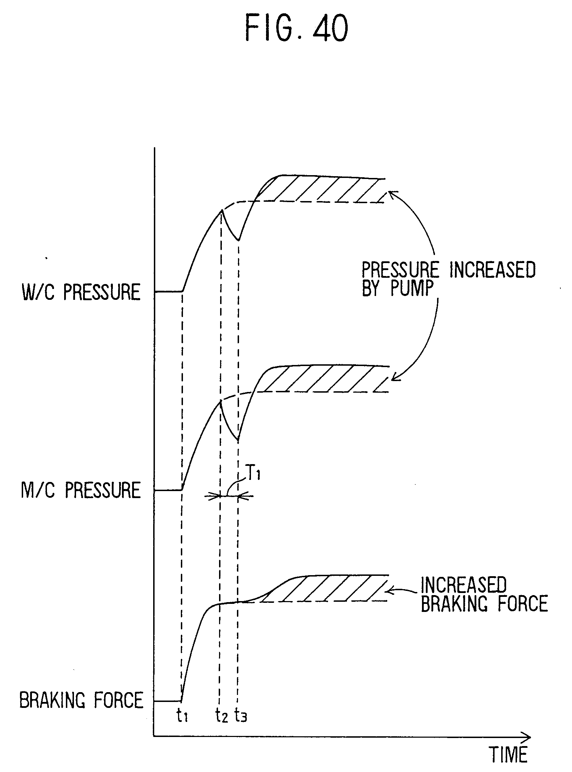

Fluctuation in brake-fluid pressure and the like due to the pressure-reducing control and pressure-increasing control of the present embodiment will be described next with reference to the explanatory drawing of FIG. 40.

As shown in FIG. 40, when the brake pedal 1 is depressed with a certain timing (time t1), M/C pressure and W/C pressure increase, and so braking force also increases.

Thereafter, when the operated quantity of the brake pedal 1 has become the reference value or more (time t2), the regulating valve 13 is actuated with the result that the conduit A2 is communicated. As a result, M/C pressure and W/C pressure rapidly decline, and together therewith, braking force also is reduced. Because the brake pedal 1 is pulled due this drop in M/C pressure, the operated quantity of the brake pedal 1 comes to be increased (that is to say, is further depressed).

Accordingly, after elapse of the predetermined time interval T1, the regulating valve 13 is deactuated and the conduit A2 is interrupted. At that time, M/C pressure and W/C pressure are increased, and braking force also is increased together therewith.

Additionally, because driving of the pump 31 is initiated simultaneously with the above-described deactuation of the regulating valve 13, M/C pressure and W/C pressure come to be increased by an amount corresponding to pressurization by the pump 31 compared with a case wherein this control is not performed (indicated by broken lines in FIG. 40), and braking force is also increased together therewith.

That is to say, because the operated quantity of the brake pedal 1 is increased more after pressure-reducing control of M/C pressure than before, when the pump 31 is driven, M/C pressure and W/C pressure are increased by an amount corresponding to at least the operated quantity thereof.

In this way, with the present embodiment, because the regulating valve 13 assumes a communicated state for the time being when the operated quantity of the brake pedal 1 has become a reference value or more, M/C pressure and W/C pressure decrease and the brake pedal 1 is pulled. Thereafter the pump 31 is driven when the regulating valve 13 has assumed an interrupted state, and so M/C pressure and W/C pressure come to be increased by an amount corresponding to driving of the pump 31 compared with a case of the above-described twelfth embodiment. Owing thereto, braking force is increased by an amount corresponding to driving of the pump 31, and so an effect is demonstrated wherein braking performance is greatly improved.

Additionally, because brake fluid is pumped from the reservoir 11 and reservoir bottoming can be prevented by driving the pump 31, the above-described operation to actuate the regulating valve 13 and allow brake fluid to escape to the reservoir 15 can be performed for a prolonged period.

Further, with the present embodiment, the timing with which driving of the pump 31 is initiated was taken to be the termination of pressure-reducing control, but timing other than this can be utilized, such as for example concurrently with starting of pressure-reducing control or during pressure-reducing control.

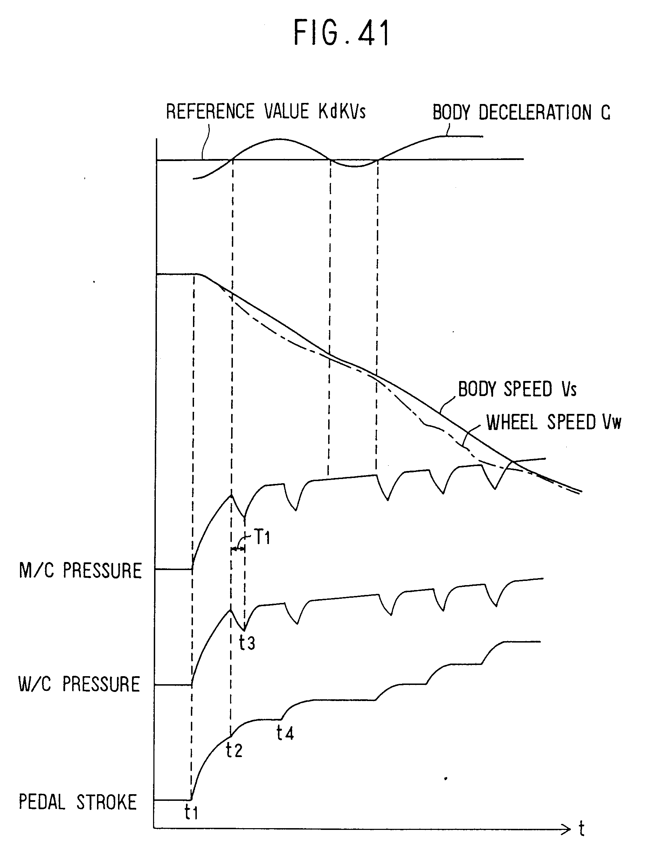

Additionally, in a case where the pressure-reducing control and the pressure-increasing control according to the present embodiment are repeated, M/C pressure and W/C pressure gradually rise and braking force increases, for example as shown in FIG. 41. Note that an example wherein vehicle-body deceleration G is utilized as the determination criterion is shown in FIG. 41.

Further, the present invention is not exclusively limited to the above-described embodiments, but can of course be embodied in various modes within the scope of the present invention.

For example, the above-described embodiments (twelfth and thirteenth embodiments) can also be employed in a vehicle performing antiskid control. In this case, a pressure-increasing valve of known art is disposed between the M/C 5 and W/C 9 in addition to the above-described regulating valve 13, and antiskid control is performed controlling this pressure-increasing valve and the regulating valve.

Vehicle-body deceleration G was utilized in the foregoing twelveth embodiment and the operated quantity of the brake pedal 1 was utilized in the foregoing thirteenth embodiment as the determination criterion for performing pressure-reducing control, but another determination criterion which will be described hereinafter to detect that pedal reaction force is large can be used.

For example, a changed quantity of the brake pedal 1 can be employed as the determination criterion. In this case, pedal reaction force is considered to be large and the regulating valve 13 is caused to assume a communicated state in a case where a changed quantity (particularly speed of change) of the operated quantity of the brake pedal 1 detected by the stroke sensor 29 has become a reference value or less.

For example, M/C pressure can be employed as the determination criterion. In this case, pedal reaction force is considered to be large and the regulating valve 13 is caused to assume a communicated state in a case where M/C pressure detected by the M/C-pressure sensor 25 has become a reference value or more.

For example, W/C pressure can be employed as the determination criterion. In this case, pedal reaction force is considered to be large and the regulating valve 13 is caused to assume a communicated state in a case where W/C pressure detected by the W/C-pressure sensor 27 has become a reference value or more.

Additionally, in a case where braking control is performed in accordance with a road-surface state, the road-surface state may be detected for example from a state of wheel deceleration. If the detected wheel deceleration is a predetermined value or more, the road-surface state is determined to be a state wherein braking force should be raised. Therefore, the regulating valve 13 is caused to assume a communicated state. Due to this, pedal reaction force is reduced, and together this, the brake pedal is pulled, and so further depression action becomes possible. As a result, braking performance is enhanced, and along with this, stability of the vehicle is improved.

Further, M/C pressure and W/C pressure were concurrently reduced and pulling action of the brake pedal was realized with the above-described embodiments, but pulling action thereof may be achieved by solely reduction of M/C pressure alone as a structure wherein for example the conduit extending from an M/C to a W/C is interrupted by a regulating valve and W/C pressure can be maintained.

**Claims**

1. A brake apparatus for a vehicle, comprising:

a brake-fluid pressure generating device (5) for generating brake-fluid pressure to apply braking force to a wheel during vehicle braking; a wheel braking force generating device (9) whereto brake-fluid pressure from said brake-fluid pressure generating device is conveyed, to generate braking force at the wheel; a first conduit (A1) communicating said brake-fluid pressure-generating device and said wheel braking-force generating device; a containing device (11) wherein brake fluid from said first conduit is containable; a second conduit (A2) one end thereof being connected to said first conduit and another end thereof being connected to said containing device; a regulating valve (13) disposed in said second conduit to control communication and interruption of said second conduit; determining means (20) for determining whether braking force of said wheel has become a predetermined value or more; and controlling means (20) for switching said regulating valve between an interrupting state and a communicating state so as to repeatedly control said interrupting state and communicating state at a predetermined interval, in a case wherein braking force of said wheel has been determined by said determining means to have become a predetermined value or more.

2. A brake apparatus for a vehicle as recited in claim 1, further comprising:

a discharging device (31) to discharge brake fluid accumulated in said containing device into said first conduit.

3. A brake apparatus for a vehicle as recited in claim 2, wherein:

said discharging device (31) is driven substantially concurrently with commencement of actuation of said regulating valve by said controlling means.

4. A brake apparatus for a vehicle as recited in any of claims 1 to 3, wherein:

said determining means (20) determines whether braking force of said wheel has become a predetermined value or more based on a wheel slippage quantity.

5. A brake apparatus for a vehicle as recited in any of claims 1 to 3, wherein:

said determining means (20) determines whether braking force of said wheel has become a predetermined value or more based on a wheel-slippage integrated value.

6. A brake apparatus for a vehicle as recited in any of claims 1 to 3, wherein:

said determining means (20) determines whether braking force of said wheel has become a predetermined value or more based on a slip ratio.

7. A brake apparatus for a vehicle as recited in any of claims 1 to 3, wherein:

said determining means (20) determines whether braking force of said wheel has become a predetermined value or more based on vehicle-body deceleration.

8. A brake apparatus for a vehicle as recited in any of claims 1 to 3, wherein:

said determining means (20) determines whether braking force of said wheel has become a predetermined value or more based on master-cylinder pressure.

9. A brake apparatus for a vehicle as recited in any of claims 1 to 3, wherein:

said determining means (20) determines whether braking force of said wheel has become a predetermined value or more based on wheel-cylinder pressure.

10. A brake apparatus for a vehicle as recited in any of claims 1 to 3, wherein:

said regulating valve (13, 14) is provided to each of several wheels and independently controlled by said controlling means at each of several wheels.

11. A brake apparatus for a vehicle as recited in any of claims 1 to 3, wherein:

said wheel braking force generating device (9, 10) is provided to each of several wheels, two of said wheel braking force generating devices being placed within a first piping system (A) and the rest of said wheel braking force generating devices being placed within a second piping system, and

said regulating valve (13, 14) provided to each of the first and second piping systems is controlled by said controlling means at each of the first and second piping systems.

12. A brake apparatus for a vehicle as recited in any of claims 1 to 3, wherein:

said regulating valve (13) is controlled by said controlling means en bloc for all wheels.

13. A brake apparatus for a vehicle as recited in any of claims 1 to 3, further comprising:

a proportioning control valve (51) disposed in said first conduit,
wherein a discharge destination of said discharging device (31) is connected between said proportioning control valve and said wheel braking-force generating device.

14. A brake apparatus for a vehicle as recited in any of claims 1 to 3, further comprising:

antiskid controlling means (13, 41, 20) for regulating brake-fluid pressure at said wheel braking-force generating device so as to optimally maintain a braking state.

15. A brake apparatus for a vehicle, comprising:

a brake pedal (1) operated by a driver at a time of vehicle braking;
a brake-fluid pressure generating device (5) to generate brake-fluid pressure according to operation of said brake pedal;
a first wheel braking force generating device (9) whereto brake-fluid pressure from said brake-fluid pressure generating device is conveyed, to generate braking force at a first wheel;
a second wheel braking force generating device (10) whereto brake-fluid pressure from said brake-fluid pressure-generating device is conveyed, to generate braking force at a second wheel;
a first conduit (A) communicating said brake-fluid pressure-generating device and said first and second wheel braking-force generating devices;
a containing device (11) wherein brake fluid from said first conduit is containable;
determining means (30) for determining whether at least one of said first wheel and second wheel have approached a road-surface limit;
first controlling means (30) for simultaneously moving brake fluid in said brake-fluid pressure-generating device and said first wheel braking-force generating device into said containing device via said first conduit, in a case wherein braking force of said first wheel has been determined by said determining means to have approached a road-surface limit; and
a discharging device (45) to substantially simultaneously discharge brake fluid accumulated in said containing device into said first conduit when said first controlling means has been executed.

16. A brake apparatus for a vehicle, comprising:

a brake pedal (1) operated by a driver at a time of vehicle braking;
a brake-fluid pressure generating device (5) to generate brake-fluid pressure according to operation of said brake pedal;
a first wheel braking force generating device (9) whereto brake-fluid pressure from said brake-fluid pressure-generating device is conveyed, to generate braking force at a first wheel;
a second wheel braking force generating device (10) whereto brake-fluid pressure from said brake-fluid pressure-generating device is conveyed, to generate braking force at a second wheel;
a first conduit (A) communicating said brake-fluid pressure-generating device and said first and second wheel braking-force generating devices;
a containing device (11) wherein brake fluid from said first conduit is containable;
determining means (30) for determining whether at least one of said first wheel and second wheel have approached a road-surface limit;
first controlling means (30) for moving brake fluid in said brake-fluid pressure-generating device and said first wheel braking-force generating device into said containing device via said first conduit, in a case wherein braking force of said first wheel has been determined by said determining means to have approached a road-surface limit;
second controlling means (30) for moving brake fluid in said brake-fluid pressure-generating device and said second wheel braking-force generating device into said containing device via said first conduit, in a case wherein braking force of said second wheel has been determined by said determining means to have approached a road-surface limit; and
a discharging device (45) to substantially simultaneously discharge brake fluid accumulated in said containing device into said first conduit when at least one of said first controlling means and said second controlling means has been executed.

**17.** A brake apparatus for a vehicle, comprising:

a brake pedal (1) operated by a driver at a time of vehicle braking;
a brake-fluid pressure generating device (5) to generate brake-fluid pressure according to operation of said brake pedal;
a first wheel braking force generating device (9) whereto brake-fluid pressure from said brake-fluid pressure-generating device is conveyed, to generate braking force at a first wheel;
a second wheel braking force generating device (10) whereto brake-fluid pressure from said brake-fluid pressure-generating device is conveyed, to generate braking force at a second wheel;
a first conduit (A1) extending from said brake-fluid pressure-generating device and branching off intermediately, with each respective end portion being connected to said first and second wheel braking-force generating devices;
a containing device (11) wherein brake fluid from said first conduit is containable;
a first reflux conduit (A2a) one end thereof being connected via said first conduit to said first wheel braking-force generating device and another end thereof being connected to said containing device;
a second reflux conduit (A2b) one end thereof being connected via said first conduit to said second wheel braking-force generating device and another end thereof being connected to said containing device;
a first regulating valve (13) disposed in said first reflux conduit to control communication and interruption of said first reflux conduit;
a second regulating valve (14) disposed in said second reflux conduit to control communication and interruption of said second reflux conduit;
determining means (30) for determining whether at least one of said first wheel and second wheel have approached a road-surface limit;
first controlling means (30) for controlling said first regulating valve between an interrupted state and a communicated state in a case wherein braking force of said first wheel has been determined by said determining means to have approached a road-surface limit;
second controlling means (30) for controlling said second regulating valve between an interrupted state and a communicated state in a case wherein braking force of said second wheel has been determined by said determining means to have approached a road-surface limit; and

a discharging device (45) to substantially simultaneously discharge brake fluid accumulated in said containing device into said first conduit when at least one of said first controlling means and said second controlling means has been executed.

**18.** A brake apparatus for vehicle use as recited in any of claims 15 to 17, wherein:

said determining means (30) determines whether braking force of said wheel has become a predetermined value or more based on a wheel slippage quantity.

**19.** A brake apparatus for a vehicle as recited in any of claims 15 to 17, wherein:

said determining means (30) determines whether braking force of said wheel has become a predetermined value or more based on a wheel-slippage integrated value.

**20.** A brake apparatus for a vehicle as recited in any of claims 15 to 17, wherein:

said determining means (30) determines whether braking force of said wheel has become a predetermined value or more based on a slip ratio.

**21.** A brake apparatus for a vehicle as recited in any of claims 15 to 17, wherein:

said determining means (30) determines whether braking force of said wheel has become a predetermined value or more based on wheel cylinder pressure.

**22.** A brake apparatus for a vehicle as recited in any of claims 15 to 17, further comprising:

antiskid controlling means (30) for regulating brake-fluid pressure at said wheel braking-force generating device so as to optimally maintain a braking state.

**23.** A brake apparatus for a vehicle, comprising:

a brake-fluid pressure generating device (146) to generate first brake-fluid pressure during vehicle braking;
a first wheel braking force generating device (141) to receive brake-fluid pressure from said brake-fluid pressure-generating device and generate wheel braking force at a first wheel;
a second wheel braking force generating device (142) to receive brake-fluid pressure from said brake-fluid pressure-generating device and generate wheel braking force at a second wheel;

a conduit (A) communicating said brake-fluid pressure-generating device and said first and second wheel braking-force generating devices;

first pressure-reducing means (151, 153, 160) for reducing brake-fluid pressure applied to said first wheel braking-force generating device while interrupting flow of brake fluid between said first wheel braking-force generating device and said second wheel braking-force generating device;

a discharging device (149) to take in brake fluid pressure-reduced by said first pressure-reducing means and discharge same toward said second wheel braking-force generating device; and

a maintaining device (156), when brake-fluid pressure at said second wheel braking-force generating device has become a second brake-fluid pressure higher than said first brake-fluid pressure due to brake fluid discharged by said discharging device, to maintain this second brake-fluid pressure.

24. A brake apparatus for a vehicle, comprising:

a brake-fluid pressure generating device (146) to generate first brake-fluid pressure during vehicle braking;

a first wheel braking force generating device (141) to receive brake-fluid pressure from said brake-fluid pressure-generating device and generate wheel braking force at a first wheel;

a second wheel braking force generating device (142) to receive brake-fluid pressure from said brake-fluid pressure-generating device and generate wheel braking force at a second wheel;

a conduit (A) communicating said brake-fluid pressure-generating device and said first and second wheel braking-force generating devices;

first pressure-reducing means (151, 153, 160) for reducing brake-fluid pressure applied to said first wheel braking-force generating device while interrupting flow of brake fluid between said first wheel braking-force generating device and said second wheel braking-force generating device;

second pressure-reducing means (152, 154, 160) for reducing brake-fluid pressure applied to said second wheel braking-force generating device while interrupting flow of brake fluid between said first wheel braking-force generating device and said second wheel braking-force generating device;

controlling means (160) for causing one of said first and second pressure-reducing means to be put in motion in accordance with vehicle-body behavior;

a discharging device (149) to take in brake fluid pressure-reduced from one of said first and second wheel braking-force generating devices by one of said first and second pressure reducing means and discharge same toward another of said first and second wheel braking-force generating devices; and

a maintaining device (156), when brake-fluid pressure at another of said first and second wheel braking-force generating devices has become a second brake-fluid pressure higher than said first brake-fluid pressure due to brake fluid discharged from said discharging device, to maintain this second brake-fluid pressure.

25. A brake apparatus for a vehicle as recited in claim 24, wherein:

said controlling means (160) is provided with load movement detecting means for detecting load movement during vehicle braking as said vehicle-body behavior.

26. A brake apparatus for a vehicle as recited in claim 25, wherein:

said controlling means (160) reduces, on a basis of detected results of said load-movement detecting means, brake-fluid pressure applied to a wheel braking-force generating device of a wheel wherefrom ground-contacting load is decreased; and

said maintaining device (156) maintains brake-fluid pressure applied to a wheel braking-force generating device of a wheel, whereto said ground-contacting load is increased, to said second brake-fluid pressure by said brake fluid pressure-reduced from said wheel braking-force generating device of said wheel wherefrom ground-contacting load is decreased.

27. A brake apparatus for a vehicle as recited in claim 25 or 26, wherein:

said load-movement detecting means is a vehicle-body deceleration detecting device (160, 162) which detects vehicle-body deceleration during vehicle braking.

28. A brake apparatus for a vehicle as recited in claim 25 or 26, wherein:

said load-movement detecting means is a turning state detecting device (160, 163) which detects a state of vehicle turning during vehicle braking.

29. A brake apparatus for a vehicle, comprising:

a brake-fluid pressure generating device (146) to generate first brake-fluid pressure during vehicle braking;
a first wheel braking force generating device (141) to receive brake-fluid pressure from said brake-fluid pressure-generating device and generate wheel braking force at a first wheel;
a second wheel braking force generating device (142) to receive brake-fluid pressure from said brake-fluid pressure-generating device and generate wheel braking force at a second wheel;
a conduit (A) communicating said brake-fluid pressure-generating device and said first and second wheel braking-force generating device;
detecting means (160, 162) for detecting slippage states of said first and second wheels;
antiskid controlling means (160) for controlling increasing and decreasing of brake-fluid pressure applied to said first and second wheel braking-force generating devices according to said slippage states;
a discharging device (149) , when pressure-reduction of brake-fluid pressure applied to either one of said first and second wheel braking-force generating device has been executed by said antiskid-controlling means, to take in the brake fluid pressure-reduced from either one of said first and second wheel braking-force generating device and discharge in said conduit; and
a maintaining device (156) to establish a second brake-fluid pressure higher than said first brake-fluid pressure in said conduit due to brake fluids discharged from said discharging device and to maintain said second brake-fluid pressure.

30. A brake apparatus for a vehicle as recited in any of claims 23 to 26 and 29, wherein:

said maintaining device (156) is disposed in said conduit; and
when first brake-fluid pressure at said brake-fluid pressure-generating device (146) is a pressure higher than a predetermined split-point pressure, brake-fluid pressure of said wheel braking-force generating device (141, 142) is maintained at said second brake-fluid pressure by attenuating brake-fluid pressure at a predetermined attenuating rate during flow of brake fluid to said brake-fluid pressure-generating device from a side of at least one of said wheel braking-force generating devices, and moreover, brake fluid flows with substantially no pressure attenuation during flow of brake fluid from a side of said brake-fluid pressure-generating device to a side of at least one of said wheel braking-force generating devices and during flow of brake fluid from a side of said wheel braking-force generating devices to a side of said brake-fluid pressure-generating device when brake-fluid pressure at said brake-fluid pressure-generating device is a predetermined split-point pressure or less.

31. A brake apparatus for a vehicle as recited in any of claims 23 to 26 and 29, wherein:

said maintaining device (156) is disposed in said conduit and is a two-way valve to communicate and interrupt flow of brake fluid between a side of said brake-fluid pressure-generating device and a side of at least one of said wheel braking-force generating devices.

32. A brake apparatus for a vehicle as recited in claim 29, wherein:

said maintaining device (156) is disposed in said conduit and is a two-way valve to communicate and interrupt flow of brake fluid between a side of said brake-fluid pressure-generating device and a side of at least one of said wheel braking-force generating devices;
said two-way valve assumes an interrupted state to interrupt flow of brake fluid between a side of said brake-fluid pressure-generating device and a side of said wheel braking-force generating device device when control for increasing or decreasing pressure is being executed for one of said first and second wheel braking-force generating devices by said antiskid-controlling means; and
said two-way valve assumes a communicated state to permit flow of brake fluid between a side of said brake-fluid pressure-generating device and a side of said wheel braking-force generating device at a time either when control for increasing or decreasing pressure is being executed for said first and second wheel braking-force generating devices, or when said antiskid-controlling means is being executed.

33. A brake apparatus for a vehicle, comprising:

a brake pedal (1) operated by a driver at a time of vehicle braking;
a brake-fluid pressure generating device (5) to generate brake-fluid pressure according to operation of said brake pedal;

a wheel braking force generating device (9) whereto brake-fluid pressure from said brake-fluid pressure-generating device is conveyed, to generate braking force at a wheel;

a conduit (A) communicating said brake-fluid pressure-generating device and said wheel braking-force generating device; and

brake-fluid pressure reducing means (13, 40) for reducing brake-fluid pressure at said brake-fluid pressure-generating device via said conduit so that said brake pedal is pulled in due to drop in brake-fluid pressure.

34. A brake apparatus for a vehicle, comprising:

a brake pedal (1) operated by a driver at a time of vehicle braking;

a brake-fluid pressure generating device (5) to generate brake-fluid pressure according to operation of said brake pedal;

a wheel braking force generating device (9) whereto brake-fluid pressure from said brake-fluid pressure-generating device is conveyed, to generate braking force at a wheel;

a conduit (A) communicating said brake-fluid pressure-generating device and said wheel braking-force generating device; and

brake-fluid pressure reducing means (13, 40) for reducing brake-fluid pressure at said brake-fluid pressure-generating device and said wheel braking-force generating device via said conduit so that said brake pedal is pulled in due to drop of brake-fluid pressure.

35. A brake apparatus for a vehicle, comprising:

a brake pedal (1) operated by a driver at a time of vehicle braking;

a brake-fluid pressure generating device (5) to generate brake-fluid pressure according to operation of said brake pedal;

a wheel braking force generating device (9) whereto brake-fluid pressure from said brake-fluid pressure-generating device is conveyed, to generate braking force at a wheel;

a first conduit (A1) communicating said brake-fluid pressure-generating device and said wheel braking-force generating device;

a containing device (11) wherein brake fluid from said first conduit is containable;

a second conduit (A2) one end thereof being connected to said first conduit and another end thereof being connected to said containing device; and

a regulating valve (13) disposed in said second conduit to regulate communication and interruption of said second conduit,

wherein, in a case of a communicated state of said regulating valve, brake-fluid pressure in said first conduit is reduced and brake fluid taken out of said first conduit is contained in said containing device.

# FIG.1

# FIG.2

TO SECOND SYSTEM

ECU 20

BRAKE SW — 21

WHEEL SPEED SENSOR — 23

W/C PRESSURE SENSOR — 25

REGULATING VALVE — 13

I/O — 20d

CPU — 20a

ROM — 20b

RAM — 20c

20e

FIG.3

```
        ┌─────────────┐
        │    START    │
        └──────┬──────┘
               │
        ┌──────┴──────┐
        │INITIALIZATION├──── 100
        └──────┬──────┘
               │
        ┌──────┴──────────┐
   ┌───→│CALCULATE WHEEL SPEED├──── 110
   │    └──────┬──────────┘
   │           │
   │    ┌──────┴──────────┐
   │    │DETERMINE        ├──── 120
   │    │ESTIMATED BODY SPEED│
   │    └──────┬──────────┘
   │           │
   │    ┌──────┴──────────┐
   │    │CALCULATE        ├──── 130
   │    │SLIPPAGE QUANTITY│
   │    └──────┬──────────┘
   │           │
   │NO   ╱─────┴──────────╲  140
   └────┤SLIPPAGE QUANTITY Xs │
        │≧REFERENCE VALUE KXs?│
        ╲─────┬──────────╱
               │YES        150
        ┌──────┴──────────┐
        │ PUMPING CONTROL │
        └──────┬──────────┘
```

FIG.5

# FIG. 4

REFERENCE VALUE KXs    SLIPPAGE QUANTITY Xs

BODY SPEED Vs
WHEEL SPEED Vw

T1
T2

M/C PRESSURE

t3

W/C PRESSURE

t4

t2

PEDAL STROKE

t1

t

# FIG. 6

```
          ┌─────────────┐
          │   START     │
          └─────────────┘
                │
          ┌──────────────┐
          │INITIALIZATION│──── 200
          └──────────────┘
                │
    ┌──────────►│
    │     ┌──────────────────┐
    │     │CALCULATE WHEEL SPEED│──── 210
    │     └──────────────────┘
    │           │
    │     ┌──────────────────┐
    │     │DETERMINE         │──── 220
    │     │ESTIMATED BODY SPEED│
    │     └──────────────────┘
    │           │
    │     ┌──────────────────┐
    │     │CALCULATE  SLIPPAGE│──── 230
    │     │QUANTITY          │
    │     └──────────────────┘
    │           │
    │     ┌──────────────────┐
    │     │CALCULATE  SLIPPAGE│──── 240
    │     │INTEGRATED  VALUE │
    │     └──────────────────┘
    │           │
    │          ╱ ╲          250
    │   NO    ╱INTEGRATED VALUE AXs╲
    ├───────◄  ≧REFERENCE VALUE KAXs  ►
    │         ╲      ?        ╱
    │          ╲   ╱
    │           │ YES
    │     ┌──────────────────┐
    │     │PUMPING CONTROL   │──── 260
    │     └──────────────────┘
    │           │
    │     ┌──────────────────┐
    │     │  DRIVE PUMP      │──── 270
    │     └──────────────────┘
    │           │
    └───────────┘
```

# FIG.7

# FIG.9

# FIG. 8

```
        ┌─────────────┐
        │    START    │
        └──────┬──────┘
               │
        ┌──────┴──────┐
        │INITIALIZATION│── 300
        └──────┬──────┘
               │
   ┌───────────┤
   │    ┌──────┴───────────┐
   │    │CALCULATE WHEEL SPEED│── 310
   │    └──────┬───────────┘
   │    ┌──────┴───────────┐
   │    │DETERMINE          │── 320
   │    │ESTIMATED BODY SPEED│
   │    └──────┬───────────┘
   │    ┌──────┴───────────┐
   │    │CALCULATE SLIP RATIO│── 330
   │    └──────┬───────────┘
   │           │
   │      ╱────┴────╲  ── 340
   │NO  ╱ SLIP RATIO S ≥ ╲
   ├───  FIRST REFERENCE VALUE
   │     ╲    KS1?   ╱
   │      ╲────┬────╱
   │          YES
   │    ┌──────┴───────────┐
   │    │ PUMPING CONTROL   │── 350
   │    └──────┬───────────┘
   │           │
   │      ╱────┴────╲  ── 360
   │NO  ╱ SLIP RATIO S ≥ ╲
   ├───  SECOND REFERENCE VALUE
   │     ╲    KS2?   ╱
   │      ╲────┬────╱
   │          YES
   │    ┌──────┴───────────┐
   │    │ ANTISKID CONTROL  │── 370
   │    └──────┬───────────┘
   │           │
   └───────────┘
```

FIG.10

TO SECOND SYSTEM

A3

A1a

FIG.12

| 21 | BRAKE SW |
| 23 | WHEEL SPEED SENSOR |
| 25 | W/C PRESSURE SENSOR |
| 41. 42 | FIRST AND SECOND INCREASING VALVE |
| 13. 14 | FIRST AND SECOND REDUCING VALVE |
| 45 | PUMP |

ECU 30

30d
30e
I/O
CPU 30a
ROM 30b
RAM 30c

# FIG. 11

# FIG.13

```
                    ┌──────────────┐
                    │    START     │
                    └──────┬───────┘
                           │
                    ┌──────────────┐
                    │INITIALIZATION│ ─── 400
                    └──────┬───────┘
                           │
                 ┌─────────────────────┐
                 │CALCULATE WHEEL SPEED │ ─── 410
                 └──────────┬──────────┘
                            │
                 ┌─────────────────────┐
                 │DETERMINE            │ ─── 420
                 │ESTIMATED BODY SPEED │
                 └──────────┬──────────┘
                            │
                 ┌─────────────────────┐
                 │CALCULATE SLIP RATIO │ ─── 430
                 └──────────┬──────────┘
                            │
          NO               ◇ ─── 440
      ◄────────────  BRAKE SW ON ?
                            │ YES
                            │                    ─── 450
          NO               ◇
      ◄──────────  SLIP RATIO ≧
                  PREDETERMINED VALUE
                            ?
                            │ YES
                    ┌──────────────┐
                    │   SET ABSF   │ ─── 460
                    └──────┬───────┘
                           │
                    ┌──────────────┐
                    │ANTISKID CONTROL│ ─── 470
                    └──────┬───────┘
                           │
                    ┌──────────────┐
                    │    E N D     │
                    └──────────────┘
```

# FIG.14

START

INITIALIZATION —500

CALCULATE WHEEL SPEED —510

DATERMINE ESTIMATED BODY SPEED —520

CALCULATE SLIPPAGE QUANTITY —530

ANTISKID CONTROL IN PROGRESS? —540
YES

NO

SLIPPAGE QUANTITY Xs ≧ REFERENCE VALUE KXs ? —550
NO

YES

MOVE REDUCING VALVE TO COMMUNICATED STATE —560

DRIVE PUMP —570

# FIG.15

# FIG.16

TO SECOND
SYSTEM

# FIG. 17

```
        ( START )
            │
  ┌─────────────────┐
  │ INITIALIZATION  │─600
  └─────────────────┘
            │
            ▼
  ┌──────────────────────┐
  │ CALCULATE WHEEL SPEED │─610
  └──────────────────────┘
            │
  ┌──────────────────────┐
  │ DETERMINE            │─620
  │ ESTIMATED BODY SPEED │
  └──────────────────────┘
            │
  ┌──────────────────────┐
  │ CALCULATE  SLIPPAGE  │─630
  │ QUANTITY             │
  └──────────────────────┘
            │
  ┌──────────────────────┐
  │ CALCULATE  SLIPPAGE  │─640
  │ INTEGRATED  VALUE    │
  └──────────────────────┘
            │
            ◇ 650
  NO ◄── INTEGRATED VALUE AXs
         ≧ REFERENCE VALUE KAXs
              ?
             YES
  ┌──────────────────────┐
  │ MOVE  REDUCING VALVE │─660
  │ TO COMMUNICATED STATE│
  └──────────────────────┘
            │
  ┌──────────────────────┐
  │     DRIVE PUMP       │─670
  └──────────────────────┘
```

# FIG.18

TO SECOND
CONDUIT

# FIG.19

W/C PRESSURE

M/C PRESSURE

0

0    P

# FIG.20

ECU    160

161 — STOP SW

162 — WHEEL SPEED SENSOR

163 — STEERING SENSOR

151,152 — INCREASING VALVE

153,154 — REDUCING VALVE

149 — PUMP

160d

I/O

160e

CPU    160a

ROM    160b

RAM    160c

# FIG. 21

```
                    ( START )
                        │
               ┌─────────────────┐
               │ INITIALIZATION  │──── 700
               └─────────────────┘
                        │
         ┌──────────────────────────────┐
    ┌───→│ CALCULATE WHEEL SPEED Vw     │──── 710
    │    └──────────────────────────────┘
    │                   │
    │    ┌──────────────────────────────┐
    │    │ CALCULATE BODY SPEED VB      │──── 720
    │    └──────────────────────────────┘
    │                   │
    │    ┌──────────────────────────────┐
    │    │ CALCULATE  WHEEL             │──── 730
    │    │ ACCELERATION dVw            │
    │    └──────────────────────────────┘
    │                   │
    │    ┌──────────────────────────────┐
    │    │ CALCULATE SLIP RATIO Sw     │──── 740
    │    └──────────────────────────────┘
    │                   │
    │        NO      ╱─────────╲   ─750
    │◄──────────────╱ STOP SW ON? ╲
    │               ╲             ╱
    │                ╲───────────╱
    │                   │ YES      ─760
    │        NO      ╱─────────╲
    │◄──────────────╱  SW ≧ KS ? ╲
    │               ╲            ╱
    │                ╲──────────╱
    │                   │ YES   ─770
    │                ╱─────────╲     NO
    │               ╱ dVw > 0 ?  ╲──────────┐
    │               ╲           ╱           │
    │                ╲─────────╱            │
    │                   │ YES  ─780         │  ─790
    │    ┌──────────────────────────┐  ┌──────────────────┐
    │    │ PULSE PRESSURE INCREASE  │  │ PRESSURE REDUCING│
    │    │ AFTER ELAPSE OF          │  │ CONTROL          │
    │    │ PREDETERMINED TIME       │  └──────────────────┘
    │    └──────────────────────────┘           │
    │                   │                        │
    └───────────────────┴────────────────────────┘
```

# FIG. 22

# FIG.23

# FIG.28

# FIG 24

# FIG. 25

TO SECOND
SYSTEM

# FIG. 26

```
                    ( START )
                        │
            ┌───────────┴───────────┐
            │     INITIALIZATION     │────800
            └───────────┬───────────┘
    ┌───────────────────┤
 940│                   │
┌───┴──────────┐ ┌──────┴──────────────┐
│CONTROL VALVE │ │CALCULATE WHEEL SPEED Vw│────810
│171 OFF       │ └──────┬──────────────┘
└──────────────┘ ┌──────┴──────────────┐
                 │CALCULATE BODY SPEED VB│────820
 930─┐           └──────┬──────────────┘
┌────┴───┐       ┌──────┴──────────────┐
│ F ← 0  │       │ CALCULATE  WHEEL     │────830
└────────┘       │ ACCELERATION dVw     │
                 └──────┬──────────────┘
                 ┌──────┴──────────────┐
                 │CALCULATE SLIP RATIO Sw│────840
                 └──────┬──────────────┘
```

STOP SW ON? 850 — NO

SW > KS ? 860 — NO

F ← 1 870

F1 AT OTHER WHEEL? 880 — YES

CONTROL VALVE 171 ON 890

dVw > 0 ? 900 — NO

920 PRESSURE REDUCING CONTROL

910 PULSE PRESSURE INCREASE AFTER ELAPSE OF PREDETERMINED TIME

54

# FIG. 27

```
              ( START )
                  |
          INITIALIZATION ──1000
                  |
          ┌───────┤
          |       |
          |  CALCULATE STEERING ──1010
          |  ANGLE ω
          |       |
          |  DETECT M/C PRESSURE PM ──1020
          |       |
    NO    |      /1030
   ◄──────────< PM>KPM? >
          |      \    /
          |       | YES
    NO    |      /1040
   ◄──────────< |ω|>|Kω| >
          |      \  ?  /
          |       | YES
          |  DRIVE PUMP ──1050
          |       |
          |  CONTROL VALVE 171 ON ──1060
          |       |
          |  PULSE PRESSURE ──1070
          |  REDUCTION OF
          |  TURNINC INNER WHEEL
          |       |
          |  CONTROL VALVE 171 OFF ──1080
          |       |
          └───────┘
```

# FIG. 29

PRESSURE-REDUCING
CONTROL VALVE

ON

OFF

T1

# FIG. 31

START

INITIALIZATION — 1100

CALCULATE WHEEL SPEED Vw — 1110

CALCULATE BODY SPEED VB — 1120

DETECT M/C PRESSURE PM — 1130

CALCULATE BODY
DECELERATION dVB — 1140

PM>KPM? — 1150
NO
YES

dVB>KdVB? — 1160
NO
YES

PULSE PRESSURE-
REDUCTION OF REAR
WHEEL CYLINDER — 1170

# FIG. 30

# FIG.32

# FIG.33A

# FIG.33B

# FIG.33C

# FIG. 34

# FIG. 35

# FIG.36

```
              ┌─────────────┐
              │   START     │
              └──────┬──────┘
          ┌──────────┴──────────┐
          │  INITIALIZATION     │────1200
          └──────────┬──────────┘
       ┌─────────────┴───────────┐
       │ CALCULATE WHEEL SPEED   │────1210
       └─────────────┬───────────┘
       ┌─────────────┴───────────┐
       │ DETERMINE ESTIMATED     │────1220
       │ BODY SPEED              │
       └─────────────┬───────────┘
       ┌─────────────┴───────────┐
       │ DETERMINE ESTIMATED     │────1230
       │ BODY DECELERATION       │
       └─────────────┬───────────┘
                     │        ────1240
        NO      ◇ BRAKE SW ON? ◇
       ◄────────
                     │ YES         ────1250
        NO   ◇ BODY DECELERATION dVs ◇
       ◄──── ◇ ≧REFERENCE VALUE KdVs ◇
                     │ ?
                     │ YES
       ┌─────────────┴───────────┐
       │ MOVE REGULATING VALVE   │────1260
       │ TO COMMUNICATED STATE   │
       └─────────────┬───────────┘
              ┌───────┴──────┐
              │   E N D      │
              └──────────────┘
```

# FIG. 37

# FIG. 38

# FIG. 39

# FIG. 40

PRESSURE INCREASED
BY PUMP

W/C PRESSURE

M/C PRESSURE

T₁

INCREASED
BRAKING FORCE

BRAKING FORCE

t₁   t₂ t₃

TIME

# FIG. 41

REFERENCE VALUE KdKVs          BODY DECELERATION G

BODY SPEED Vs

WHEEL SPEED Vw

M/C PRESSURE

T1

W/C PRESSURE

t3

PEDAL STROKE

t1

t2

t4

t

# FIG.42A

WHEEL SPEED

START OF
BRAKING

t

t₁

# FIG.42B

W/C PRESSURE

t

t₁     t₂

# FIG.42C

BODY DECELERATION

t

t₁     t₂